(19) Europäisches Patentamt
European Patent Office
Office européen des brevets

(11) **EP 4 201 706 A1**

(12) **EUROPEAN PATENT APPLICATION**
published in accordance with Art. 153(4) EPC

(43) Date of publication:
**28.06.2023 Bulletin 2023/26**

(21) Application number: **22791323.3**

(22) Date of filing: **02.02.2022**

(51) International Patent Classification (IPC):
*B60C 11/00* (2006.01)       *B60C 1/00* (2006.01)
*C08K 3/04* (2006.01)        *C08K 3/36* (2006.01)
*C08L 7/00* (2006.01)        *C08L 9/00* (2006.01)
*C08L 17/00* (2006.01)       *C08L 57/02* (2006.01)
*C08L 75/04* (2006.01)       *C08L 83/04* (2006.01)

(52) Cooperative Patent Classification (CPC):
**B60C 1/00; B60C 11/00; C08K 3/04; C08K 3/36;
C08L 7/00; C08L 9/00; C08L 17/00; C08L 57/02;
C08L 75/04; C08L 83/04**

(86) International application number:
**PCT/JP2022/004101**

(87) International publication number:
**WO 2022/224538 (27.10.2022 Gazette 2022/43)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.04.2021   JP 2021070603**

(71) Applicant: **Sumitomo Rubber Industries, Ltd.
Kobe-shi, Hyogo 651-0072 (JP)**

(72) Inventor: **HAMAMURA, Kenji
Kobe-shi, Hyogo 651-0072 (JP)**

(74) Representative: **Winter, Brandl - Partnerschaft
mbB
Alois-Steinecker-Straße 22
85354 Freising (DE)**

(54) **TIRE**

(57)    Provided is a tire comprising a tread part, the tread part having at least one rubber layer, wherein a ratio ($G/W_L$) of a tire weight G (kg) to the maximum load capacity $W_L$ (kg) of the tire is 0.0160 or less, wherein the tread part has land parts partitioned by tread edge and a plurality of circumferential grooves extending continuously in a tire circumferential direction, wherein a first rubber layer of the tread surface is composed of a rubber composition comprising a rubber component, and wherein a contact angle $\theta$ with a pure water of the rubber composition is 105° or more.

FIG. 2

**Description**

TECHNICAL FIELD

The present disclosure relates to a tire.

BACKGROUND ART

As a method of improving wet grip performance of a tire by improving adhesiveness on a wet road surface, for example, a method of compounding a plasticizing agent such as resin into a tread rubber is known (Patent Document 1).

PRIOR ART DOCUMENT

Patent Document

Patent Document 1: JP 2007-56137 A

SUMMARY OF THE INVENTION

PROBLEM TO BE SOLVED BY THE INVENTION

A tire has a large rotational inertia during rolling, and thus, when it comes into contact with a wet road surface, a situation occurs in which water cannot be completely removed between a tread surface and the road surface. It is considered that this is because water is trapped between the tread surface and the road surface due to the tread edge resulting in contact with the ground before the water is removed. In particular, since, during high-speed running, a contact speed between the road surface and the tread surface is high, it is considered that the water is easily trapped. As such, there is room for improvement in terms of wet grip performance during high-speed running.

It is an object of the present disclosure to provide a tire having improved wet grip performance during high-speed running.

MEANS TO SOLVE THE PROBLEM

As a result of intensive studies, it was found that a tire having improved wet grip performance can be obtained by setting a tire weight with respect to the maximum load capacity of the tire and a contact angle with a pure water of a rubber composition of a tread within predetermined ranges.

That is, the present disclosure relates to a tire comprising a tread part, the tread part having at least one rubber layer, wherein a ratio ($G/W_L$) of a tire weight G (kg) to the maximum load capacity $W_L$ (kg) of the tire is 0.0160 or less, wherein the tread part has land parts partitioned by tread edge and a plurality of circumferential grooves extending continuously in a tire circumferential direction, wherein a first rubber layer of the tread surface is composed of a rubber composition comprising a rubber component, and wherein a contact angle θ with a pure water of the rubber composition is 105° or more.

EFFECT OF THE INVENTION

According to the present disclosure, a tire having improved wet grip performance during high-speed running is provided.

BRIEF DESCRIPTION OF THE DRAWINGS

FIG. 1 is an enlarged cross-sectional view schematically showing a part of a tread of a tire according to one embodiment of the present disclosure.

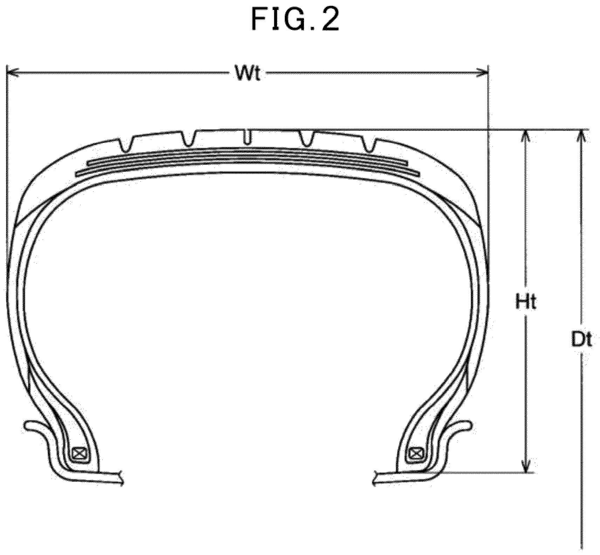

FIG. 2 is a cross-sectional view showing a tire cross-sectional width Wt, a tire cross-sectional height Ht, and a tire outer diameter Dt.

EMBODIMENT FOR CARRYING OUT THE INVENTION

The tire that is one embodiment of the present disclosure is a tire comprising a tread part, the tread part having at least one rubber layer, wherein a ratio ($G/W_L$) of a tire weight G (kg) to the maximum load capacity $W_L$ (kg) of the tire is 0.0160 or less (preferably 0.0157 or less, more preferably 0.0155 or less, further preferably 0.0153 or less, particularly preferably 0.0150 or less), wherein the tread part has land parts partitioned by tread edge and a plurality of circumferential grooves extending continuously in a tire circumferential direction, wherein a first rubber layer of the tread surface is composed of a rubber composition comprising a rubber component, and wherein a contact angle $\theta$ with a pure water of the rubber composition is 105° or more (preferably 107° or more, more preferably 109° or more, further preferably 111° or more, further preferably 113° or more, particularly preferably 115° or more).

When the tire weight with respect to the maximum load capacity of the tire and the contact angle with the pure water of the rubber composition of the tread satisfy the above-described requirements, the obtained tire has improved wet grip performance during high-speed running. The reason for that is not intended to be bound by theory, but is considered as follows.

A tire has a large rotational inertia during rolling, and thus, when it comes into contact with a wet road surface, a situation occurs in which water cannot be completely removed between a tread surface and the road surface. The tire of the present disclosure has features that (1) the rotational inertia during rolling can be reduced by reducing the tire weight with respect to the maximum load capacity, and (2) the contact angle with the pure water of the tread rubber is increased, which improves water repellency of the tread rubber. In addition, it is considered that, with cooperation of these features, a notable effect of improving wet grip performance particularly during high-speed running is achieved.

The rubber composition preferably comprises 50 parts by mass or more of silica based on 100 parts by mass of the rubber component. Moreover, a content of carbon black in the rubber composition based on 100 parts by mass of the rubber component is preferably 15 parts by mass or less.

When a content of silica and carbon black is within the above-described ranges, the rubber composition has a small elasticity even in a low strain region, so that the tread surface can follow fine road surface irregularities. As a result, the contact area between the tread surface and the road surface increases, so that it is considered that an amount of water trapped when the tread touches the ground can be reduced.

A ratio ($\theta/G$) of the contact angle $\theta$ (°) with the pure water of the rubber composition to the tire weight G (kg) is preferably 12.5 or more.

The heavier the tire is, the larger the rotational inertia becomes, making it difficult to remove water. However, by setting $\theta/G$ within the above-described range and increasing water repellency of the tread rubber as the tire weight increases, drainage performance of the tire can be maintained. Moreover, since a grounding pressure and a grounding area with a road surface increase as the tire weight increases, a coefficient of friction can be improved, and it is considered that wet grip performance is further improved.

The rubber composition preferably comprises at least one selected from a group consisting of a recycled rubber and a powdered rubber.

It is considered that a domain different from a matrix layer of the recycled rubber or the like is generated, so that hooking between the tread part and a road surface after water removal easily occurs, thereby improving wet grip performance during high-speed running.

The rubber composition preferably comprises at least one selected from a group consisting of silicone, a silicone-based polyurethane, and a fluorine-based polyurethane.

By compounding silicone into the rubber composition, water repellency of the tread rubber can be improved, and it is considered that this rubber composition is used for the tread part to prepare a tire, so that wet grip performance can be improved. In addition, an urethane-derived structure of a silicone-based polyurethane and a fluorine-based polyurethane contributes to affinity with the rubber component, and it is considered that a water-repellent effect is further exhibited without a silicone or fluororesin-derived structure being separated from the rubber component.

The rubber composition preferably comprises at least one selected from a group consisting of a terpene-based resin and a cyclopentadiene-based resin.

By compounding a terpene-based resin and/or a cyclopentadiene-based resin into the rubber composition, water repellency of the tread rubber can be improved, and it is considered that this rubber composition is used for the tread part to prepare a tire, so that wet grip performance can be improved. Moreover, it is considered that use of silicone and the like in combination improves affinity with the rubber component, so that the water-repellent effect is further exhibited without silicone and the like being separated from the rubber component.

The rubber composition preferably comprises 30 parts by mass or more of oil based on 100 parts by mass of the rubber component.

By setting an oil content within the above-described range, water repellency and followability of the tread rubber can be improved, and it is considered that this rubber composition is used for the tread part to prepare a tire, so that wet grip performance can be improved.

A ratio (0°C tan $\delta$/0°C E*) of a tan $\delta$ at 0°C (0°C tan $\delta$) of the rubber composition to a complex elastic modulus (MPa) at 0°C (0°C E*) in the rubber composition is preferably 0.020 or more.

When 0°C tan $\delta$/0°C E* is within the above-described range, the tread part in contact with the road surface after water removal can exhibit good followability and heat generation, so that it is considered that wet grip performance during high-speed running is improved.

A groove depth of the deepest part of the circumferential groove is preferably 5.0 to 9.0 mm.

When the groove depth of the deepest part of the circumferential groove is within the above-described range, it is considered that the water repelled by the water-repellent effect of the tread surface can be easily shed off within the groove.

When a length in a width direction on the tread surface of the land part closest to a tire equatorial plane is defined as $L_0$, and a length in a width direction at 90% position of a groove depth of the deepest part of the circumferential groove adjacent to the land part closest to the tire equatorial plane is defined as $L_{90}$, $L_0/L_{90}$ is preferably 0.95 or less.

When $L_{90}/L_0$ is within the above-described range, a contact pressure on the tread surface can be increased, and it is considered that water can be easily drained between the tread surface and the road surface.

<Definition>

The "tire weight" is expressed in G (kg). However, G is a weight of a single tire not including a weight of a rim. Moreover, when a noise suppressing material, a sealant, a sensor, etc. are attached to a tire lumen, G is a value including these weights.

A "standardized rim" is a rim defined for each tire in a standard system including a standard, on which the tire is based, by the standard, i.e., a "standard rim" in JATMA, "Design Rim" in TRA, or "Measuring Rim" in ETRTO. Besides, if a size of the tire is not specified in the above-described standard system, the standardized rim is a rim which can be assembled to the tire and whose width is narrowest among rims having the smallest diameter that does not cause air leakage between the rim and the tire.

A "standardized internal pressure" is an air pressure defined for each tire in a standard system including a standard on, which the tire is based, by the standard, i.e., a "MAXIMUM AIR PRESSURE" in JATMA, a maximum value described in Table "TIRE LOAD LIMITS AT VARIOUS COLD INFLATION PRESSURES" in TRA, or "INFLATION PRESSURE" in ETRTO. Besides, if a size of the tire is not specified in the above-described standard system, the standardized internal pressure shall be 250 kPa.

A "standardized state" is a state where the tire is rim-assembled on a standardized rim, a standardized internal pressure is filled, and no load is applied. Besides, in a case of a tire having a size not specified in the above-described standard system, the standardized state is a state where the tire is rim-assembled on the minimum rim, 250 kPa is filled, and no load is applied. In the present specification, a dimension of each part of a tire (a tire cross-sectional width Wt, etc.) is measured in the above-described standardized state, unless otherwise specified.

The "maximum load capacity ($W_L$) (kg)" is a value calculated by the following equation (1) and (2) when a tire cross-sectional width measured in a standardized state is defined as Wt (mm), a tire cross-sectional height is defined as Ht (mm), and a tire outer diameter is defined as Dt (mm). V is a virtual volume of space occupied by a tire. The tire cross-sectional width Wt is a maximum width between outer surfaces of sidewalls excluding, if any, patterns or characters on the side surface of the tire in the above-described state. The cross-sectional height Ht of the tire is a distance from the bottom surface of a bead part to the outermost surface of a tread, and is half a difference between the outer diameter of the tire and a nominal size of a rim.

$$V = \{(Dt/2)^2 - (Dt/2-Ht)^2\} \times \pi \times Wt \ (1)$$

$$W_L = 0.000011 \times V + 100 \ (2)$$

The "tread edge" is an outermost grounding position when the maximum load capacity ($W_L$) is applied to a tire in the standardized state and the tire is grounded on a flat surface at a camber angle of 0 degree.

The "land part" refers to a region partitioned by tread edge and a plurality of circumferential grooves extending continuously in a tire circumferential direction in a tread part. For example, when there are two circumferential grooves, the land part is divided into a pair of shoulder land parts and a center land part sandwiched therebetween, and when there are three circumferential grooves, the center land part is further divided into a land part located inside a vehicle and a land part located outside the vehicle when the tire being mounted on the vehicle. "The land part closest to the tire equatorial plane" refers to a land part in a case where it is present on the tire equatorial plane C or a land part having a groove edge 4 closest to the tire equatorial plane of the circumferential groove 2 present on the tire equatorial plane C in a case where there is no land part present on the tire equatorial plane C.

The "groove depth of the circumferential groove" is calculated by a distance between a tread surface 1 and an extension line of the deepest part of a groove bottom of a circumferential groove 2. Besides, the groove depth H is, for example, in a case where are a plurality of circumferential grooves 2, a distance between a tread surface 1 and an extension line of the deepest part of a groove bottom of a circumferential groove 2 having the deepest groove depth among the plurality of circumferential grooves 2.

The "recycled rubber" is one obtained by recycling a used rubber of automobile tires, tubes, and other rubber products specified in JIS K 6313:2012, etc. and having equivalent properties therewith. Besides, powdery ones are excluded. In addition, the recycled rubber is desulfurized. The "powdered rubber" is a vulcanized powdered rubber obtained by recycling a waste rubber product. As a waste rubber used for a raw material of the powdered rubber, it is preferable to use a crushed tread rubber of a used tire, spews and burrs from reaping, etc. (crushed products of waste tires), from the viewpoints of environmental consideration and cost.

A "SP value of a resin component" means a solubility parameter calculated by the Hoy method based on a structure of a compound, and the smaller the difference between SP values of two components is, the better the compatibility becomes. The Hoy method is a calculation method described in, for example, K. L. Hoy "Table of Solubility Parameters", Solvent and Coatings Materials Research and Development Department, Union Carbites Corp. (1985).

An "oil content" also includes an amount of oil contained in the oil-extended rubber.

<Measuring method>

The "contact angle with the pure water" is an angle obtained by dropping 2.0 $\mu$L of pure water onto a surface of each rubber specimen held horizontally and defining an end of a droplet after 180 seconds of dropping with a surface of a rubber composition. A sample for contact angle measurement is a vulcanized rubber composition of 20 mm in length $\times$ 30 mm in width $\times$ 2 mm in thickness. When it is produced by being cut out from a tire, it is cut out from a tread part of the tire so that a tire circumferential direction becomes a long side.

The "0°C tan $\delta$" is a loss tangent measured under a condition of a temperature at 0°C, an initial strain of 10%, a dynamic strain of 2.5%, and a frequency of 10 Hz. A sample for loss tangent measurement is a vulcanized rubber composition of 20 mm in length $\times$ 4 mm in width $\times$ 1 mm in thickness. When it is produced by being cut out from a tire, it is cut out from a tread part of the tire so that a tire circumferential direction becomes a long side.

The "0°C E*" is a complex elastic modulus measured under a condition of a temperature at 0°C, an initial strain of 10%, a dynamic strain of 2.5%, and a frequency of 10 Hz. A sample for measuring the complex elastic modulus is produced in the same manner as in the case for the 0°C tan $\delta$.

A "styrene content" is a value calculated by $^1$H-NMR measurement, and is applied to, for example, a rubber component having a repeating unit derived from styrene such as a SBR. A "vinyl content (1,2-bond butadiene unit amount)" is a value calculated by infrared absorption spectrometry according to JIS K 6239-2:2017, and is applied to, for example, a rubber component having a repeating unit derived from butadiene such as a SBR and a BR. A "cis content (cis-1,4-bond butadiene unit amount)" is a value calculated by infrared absorption spectrometry according to JIS K 6239-2: 2017, and is applied to, for example, a rubber component having a repeating unit derived from butadiene such as a BR.

A "weight-average molecular weight (Mw)" can be calculated in terms of a standard polystyrene based on measurement values obtained by a gel permeation chromatography (GPC) (e.g., GPC-8000 Series manufactured by Tosoh Corporation, detector: differential refractometer, column: TSKGEL SUPERMULTIPORE HZ-M manufactured by Tosoh Corporation). For example, it is applied for a SBR, a BR, and the like.

A "nitrogen adsorption specific surface area ($N_2SA$) of carbon black" is measured according to JIS K 6217-2: "Carbon black for rubber industry-Fundamental characteristics-Part 2: Determination of specific surface area-Nitrogen adsorption methods-Single-point procedures". A "nitrogen adsorption specific surface area ($N_2SA$) of silica" is measured by the BET method according to ASTM D3037-93. An "average primary particle size of silica" can be calculated by observing silica with a transmission or scanning electron microscope, measuring 400 or more primary particles of silica observed in the field of view, and averaging them. An "average particle size of a powdered rubber" is an average particle size on a mass basis calculated from a particle size distribution measured in accordance with JIS Z 8815: 1994.

A "softening point of a resin component" is a temperature at which a sphere drops when the softening point specified in JIS K 6220-1: 2001 is measured with a ring and ball softening point measuring device.

A procedure for producing a tire that is one embodiment of the present disclosure will be described in detail below. However, the following descriptions are illustrative for explaining the present disclosure, and are not intended to limit the technical scope of the present disclosure to this description range only. Besides, in the present specification, a numerical range identified with "to" means to include the numerical values of both ends.

<Tire>

In the tire according to the present disclosure, the ratio ($G/W_L$) of the tire weight G (kg) to the maximum load capacity $W_L$ (kg) is 0.0160 or less, preferably 0.0157 or less, more preferably 0.0155 or less, further preferably 0.0153 or less, particularly preferably 0.0150 or less, from the viewpoint of effects of the present disclosure. A lower limit of the $G/W_L$ is not particularly limited from the viewpoint of the effects of the present disclosure, but it can be, for example, 0.0120 or more, 0.0125 or more, 0.0130 or more, or 0.0135 or more. Besides, the tire weight G can be changed by a conventional method, that is, it can be increased by increasing the specific gravity of the tire or by increasing the thickness of each member of the tire, and it can be decreased by decreasing the specific gravity of the tire or by decreasing the thickness of each member of the tire.

The maximum load capacity $W_L$ (kg) is preferably 300 or more, more preferably 400 or more, further preferably 450 or more, particularly preferably 500 or more, from the viewpoint of better exhibiting the effects of the present disclosure. Moreover, the maximum load capacity $W_L$ (kg) can be, for example, 1300 or less, 1200 or less, 1100 or less, 1000 or less, 900 or less, 800 or less, 700 or less, or 650 or less, from the viewpoint of better exhibiting the effects of the present disclosure. Besides, the maximum load capacity $W_L$ can be increased by increasing the virtual volume V of the space occupied by the tire, and it can be decreased by decreasing the virtual volume V of the space occupied by the tire.

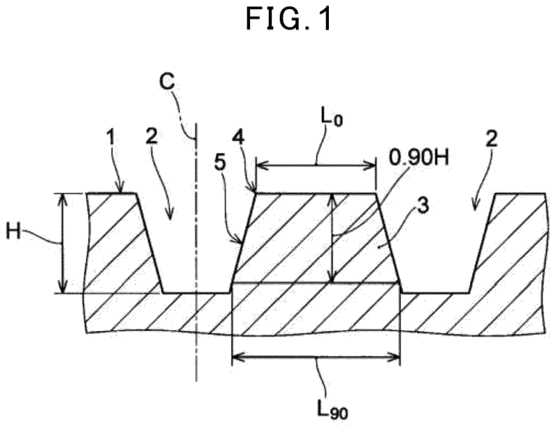

FIG. 1 is an enlarged cross-sectional view showing a part of the tread of the tire. In FIG. 1, a vertical direction is a tire radial direction, a horizontal direction is a tire width direction, and a direction perpendicular to a paper surface is a tire circumferential direction.

The tread part of the present disclosure has a plurality of circumferential grooves 2 continuously extending in a tire circumferential direction. When there are two or more circumferential grooves, a land part 3 is divided into at least a pair of shoulder land parts and a center land part sandwiched therebetween, and when there are three or more circumferential grooves, the center land part is further divided into at least a land part located inside a vehicle and a land part located outside the vehicle when mounted on the vehicle. Accordingly, a tread pattern of each land part can be made different, which is preferable because a degree of freedom in designing the tread pattern is improved. When the number of circumferential grooves is three or more, the pair of circumferential grooves located on the outermost side in the tire width direction are referred to as outermost circumferential grooves. The number of circumferential grooves may be four or more, or five or more. The circumferential groove 2 may extend linearly along the circumferential direction or may extend in a wavy, sinusoidal, or zigzag shape.

It is preferable that the length in the width direction of the land part 3 gradually increases from outside to inside in the tire radial direction. A groove wall 5 of the circumferential groove 2 of the present disclosure extends linearly from outside to inside in the tire radial direction, though the present invention is not limited to such an embodiment, and the groove wall may extend in, for example, a curved shape or a stepped shape.

When the length in the width direction on the tread surface of the land part closest to the tire equatorial plane is defined as $L_0$, and the length in the width direction at 90% position of the groove depth of the deepest part of the circumferential groove 2 adjacent to the land part closest to the tire equatorial plane is defined as $L_{90}$, $L_0/L_{90}$ is preferably 0.95 or less, more preferably 0.90 or less. When $L_0/L_{90}$ is within the above-described ranges, a good wet grip performance can be maintained even after abrasion. Besides, $L_{90}$ is calculated from the length in the width direction of the land part 3 at 0.90H position from the tread surface 1 to the inner side in the tire radial direction (90% position of the groove depth H of the circumferential groove 2 adjacent to the land part, of the land part 3 closest to the tire equatorial plane), as shown in the figure.

The groove depth H of the circumferential groove 2 is preferably 20% or more, more preferably 30% or more, of the thickness of the entire tread part. Moreover, the groove depth H of the circumferential groove 2 is preferably 60% or less, more preferably 50% or less, of the thickness of the entire tread part. Besides, the thickness of the entire tread part in the present disclosure means a total thickness of rubber layers forming the tread part, and is calculated by the shortest distance from the tread surface 1 to the belt layer.

The groove depth of the circumferential groove 2 is preferably 5.0 mm or more, more preferably 6.0 mm or more, from the viewpoint of the effects of the present disclosure. Moreover, the groove depth of the circumferential groove 2 is preferably 9.0 mm or less, more preferably 8.5 mm or less, from the viewpoint of the effects of the present disclosure.

The land part 3 may be provided with a lateral groove and/or a sipe crossing the land part 3. Besides, in the present specification, a "groove" including the circumferential groove and the lateral groove refers to a recess having a width at least larger than 2.0 mm. On the other hand, in the present specification, a "sipe" refers to a narrow notch having a width of 2.0 mm or less, preferably 0.5 to 2.0 mm.

In the present disclosure, the tread has at least one rubber layer. The tread of the present disclosure may be a tread consisting of a single rubber layer or may be a tread having a first rubber layer whose outer surface forms a tread surface 1 and one or more rubber layers present between the first rubber layer and the belt layer.

A thickness of the first rubber layer with respect to a thickness of the entire tread part can be, for example, 30% or more, 50% or more, 70% or more, or 90% or more, and the tread may be one consisting of the first rubber layer.

A complex elastic modulus at 0°C (0°C E*) of the rubber composition constituting the first rubber layer of the tread surface is preferably 11.0 MPa or less, more preferably 10.0 MPa or less, further preferably 9.5 MPa or less. When the 0°C E* of the rubber composition is within the above-described ranges, a better wet grip performance tends to be obtained. Moreover, the 0°C E* of the rubber composition is preferably 4.0 MPa or more, more preferably 5.0 MPa or more, further preferably 6.0 MPa or more. Besides, the 0°C E* of the rubber composition can be appropriately adjusted depending on types and compounding amounts of a rubber component, a powdered rubber, a recycled rubber, silicone, a silicone-based polyurethane, a fluorine-based polyurethane, a resin component, oil, and the like.

A tan δ at 0°C (0°C tan δ) of the rubber composition constituting the first rubber layer of the tread surface is preferably 0.20 or more, more preferably 0.22 or more, further preferably 0.24 or more. When the 0°C tan δ of the rubber composition is within the above-described ranges, a better wet grip performance tends to be obtained. Moreover, the 0°C tan δ of the rubber composition is preferably 0.60 or less, more preferably 0.50 or less, further preferably 0.40 or less. Besides, the 0°C tan δ of the rubber composition can be appropriately adjusted depending on types and compounding amounts of a rubber component, a powdered rubber, a recycled rubber, silicone, a silicone-based polyurethane, a fluorine-based polyurethane, a resin component, oil, and the like.

A contact angle θ (°) with the pure water of the rubber composition constituting the first rubber layer of the tread surface is 105° or more, preferably 107° or more, more preferably 109° or more, further preferably 111° or more, further preferably 113° or more, particularly preferably 115° or more, from the viewpoint of increasing water repellency of the tread rubber to improve wet grip performance during high-speed running. Moreover, an upper limit value of the contact angle θ (°) with the pure water of the rubber composition is not particularly limited, but it can be, for example, 170° or lower, 160° or lower, 150° or lower, 140° or lower, or 130° or lower. Besides, the contact angle with the pure water of the rubber composition can be appropriately adjusted depending on types and compounding amounts of a rubber component, a powdered rubber, a recycled rubber, silicone, a silicone-based polyurethane, a fluorine-based polyurethane, a resin component, oil, and the like.

A ratio (θ/G) of the contact angle θ (°) with the pure water of the rubber composition constituting the first rubber layer of the tread surface to the tire weight G (kg) is 12.5 or more, preferably 12.7 or more, further preferably 13.0 or more, further preferably 13.3 or more, particularly preferably 13.5 or more. The heavier the tire is, the larger the rotational inertia becomes, making it difficult to remove water. However, by setting θ/G within the above-described range and increasing water repellency of the tread rubber as the tire weight increases, drainage performance of the tire can be maintained. Moreover, since a grounding pressure and a grounding area with a road surface increase as the tire weight increases, a coefficient of friction can be improved, and it is considered that wet grip performance is further improved. On the other hand, an upper limit value of the θ/G is not particularly limited, but it can be, for example, 16.0 or less or 15.5 or less.

A ratio (0°C tan δ/0 °C E*) of the tan δ at 0°C (0°C tan δ) of the rubber composition to the complex elastic modulus (MPa) at 0°C (0°C E*) of the rubber composition constituting the first rubber layer of the tread surface is preferably 0.020 or more, more preferably 0.025 or more, further preferably 0.030 or more. When the 0°C tan δ/0 °C E* is within the above-described ranges, the tread part in contact with the road surface after water removal can exhibit good followability and heat generation, so that it is considered that wet grip performance during high-speed running is improved. Moreover, the ratio (0°C tan δ /0°C E*) of tan δ at 0°C (0°C tan δ) of the rubber composition to the complex elastic modulus (MPa) at 0°C (0°C E*) of the rubber composition constituting the first rubber layer of the tread surface is preferably 0.060 or less, more preferably 0.050 or less, further preferably 0.045 or less.

[Rubber composition]

In the tire of the present disclosure, the tire weight and the tread pattern mentioned above cooperate with the physical properties of the rubber composition, so that wet grip performance during high-speed running can be improved more effectively.

<Rubber component>

As the rubber component constituting the first rubber layer, a diene-based rubber is appropriately used. A content of the diene-based rubber in the rubber component is preferably 80% by mass or more, more preferably 85% by mass or more, further preferably 90% by mass or more, particularly preferably 95% by mass or more, from the viewpoint of the effects of the present disclosure. Moreover, the rubber component may be one consisting of a diene-based rubber. Besides, the rubber component of the present disclosure shall be one that does not comprise a recycled rubber and a powdered rubber, which will be described later.

Examples of the diene-based rubber include, for example, an isoprene rubber, a butadiene rubber (BR), a styrene-butadiene rubber (SBR), a styrene-isoprene rubber (SIR), a styrene-isoprene-butadiene rubber (SIBR), a chloroprene rubber (CR), an acrylonitrile-butadiene rubber (NBR), and the like. These diene-based rubbers may be used alone, or two or more thereof may be used in combination. Among them, it is preferable to comprise at least one selected from a group consisting of an isoprene-based rubber, a BR, and a SBR, it is more preferable to comprise an isoprene-based rubber, and it is further preferable to comprise an isoprene-based rubber and a BR. Moreover, the rubber component may be one consisting of an isoprene-based rubber and a BR.

(Isoprene-based rubber)

Examples of the isoprene-based rubber include a natural rubber (NR), an isoprene rubber (IR), a purified NR, a modified NR, a modified IR, and the like. As the NR, those common in the tire industry such as, for example, SIR20, RSS#3, and TSR20 can be used. The IR is not particularly limited, and those common in the tire industry such as, for example, IR 2200 can be used. Examples of the purified NR include a deproteinized natural rubber (DPNR), an ultra pure natural rubber, and the like, examples of the modified NR include an epoxidized natural rubber (ENR), a hydrogenated natural rubber (HNR), a grafted natural rubber, and the like, and examples of the modified IR include an epoxidized isoprene rubber, a hydrogenated isoprene rubber, a grafted isoprene rubber, and the like. These isoprene-based rubbers may be used alone, or two or more thereof may be used in combination.

A content of the isoprene-based rubber in the rubber component is preferably 10% by mass or more, more preferably 20% by mass or more, further preferably 30% by mass or more, particularly preferably 40% by mass or more, from the viewpoint of the effects of the present disclosure. Moreover, the content of the isoprene-based rubber may be 100% by mass, or preferably 90% by mass or less, more preferably 80% by mass or less, further preferably 70% by mass or less.

(BR)

The BR is not particularly limited, and those common in the tire industry can be used such as, for example, a BR having a cis content of less than 50 mol% (a low cis BR), a BR having a cis content of 90 mol% or more (a high cis BR), a rare-earth-based butadiene rubber synthesized using a rare-earth element-based catalyst (a rare-earth-based BR), a BR containing a syndiotactic polybutadiene crystal (a SPB-containing BR), and a modified BR (a high cis modified BR, a low cis modified BR). These BRs may be used alone, or two or more thereof may be used in combination. Besides, the cis content of the BR is measured by the above-described measuring method.

As the high cis BR, for example, those commercially available from Zeon Corporation, Ube Industries, Ltd., JSR Corporation, etc. can be used. When the high cis BR is compounded, low temperature characteristics and abrasion resistance can be improved. The cis content of the high cis BR is preferably 95 mol% or more, more preferably 96 mol% or more, further preferably 97 mol% or more. Besides, the cis content of the BR is measured by the above-described measuring method.

A weight-average molecular weight (Mw) of the BR is preferably 300,000 or more, more preferably 350,000 or more, further preferably 400,000 or more, from the viewpoint of abrasion resistance. Moreover, it is preferably 2,000,000 or less, more preferably 1,500,000 or less, further preferably 1,000,000 or less, from the viewpoints of cross-linking uniformity and the like. Besides, the Mw of the BR is measured by the above-described measuring method.

A content of the BR in the rubber component is preferably 10% by mass or more, more preferably 20% by mass or more, further preferably 30% by mass or more, particularly preferably 40% by mass or more, from the viewpoint of the effects of the present disclosure. Moreover, the content of the BR is preferably 80% by mass or less, more preferably 70% by mass or less, further preferably 60% by mass or less.

(SBR)

The SBR is not particularly limited, examples of which include a solution-polymerized SBR (S-SBR), an emulsion-polymerized SBR (E-SBR), modified SBRs (a modified S-SBR, a modified E-SBR) thereof, and the like. Examples of the modified SBR include a SBR modified at its terminal and/or main chain, a modified SBR coupled with tin, a silicon compound, etc. (a modified SBR of condensate or having a branched structure, etc.), and the like. Furthermore, hydrogenated ones of these SBRs (hydrogenated SBRs) and the like can also be used. These SBRs may be used alone, or two or more thereof may be used in combination.

Examples of the S-SBR that can be used in the present disclosure include S-SBRs manufactured and sold by JSR Corporation, Sumitomo Chemical Co., Ltd., Ube Industries, Ltd., Asahi Kasei Corporation, ZS Elastomer Co., Ltd., etc.

A styrene content of the SBR is preferably 10% by mass or more, more preferably 15% by mass or more, further preferably 20% by mass or more, from the viewpoints of wet grip performance and abrasion resistance. Moreover, the styrene content of the SBR is preferably 60% by mass or less, more preferably 50% by mass or less, further preferably 40% by mass or less, from the viewpoint of the effects of the present disclosure. Besides, the styrene content of the SBR is measured by the above-described measuring method.

A vinyl content of the SBR is preferably 10 mol% or more, more preferably 15 mol% or more, further preferably 20 mol% or more, from the viewpoints of ensuring reactivity with silica and wet grip performance. Moreover, the vinyl content of the SBR is preferably 70 mol % or less, more preferably 65 mol % or less, further preferably 60 mol % or less, from the viewpoint of the effects of the present disclosure. Besides, the vinyl content of the SBR is measured by the above-described measuring method.

A weight-average molecular weight (Mw) of the SBR is preferably 200,000 or more, more preferably 250,000 or more, from the viewpoint of wet grip performance. Moreover, it is preferably 2,000,000 or less, more preferably 1,800,000 or less, further preferably 1,500,000 or less, from the viewpoint of cross-linking uniformity. Besides, the Mw of the SBR is measured by the above-described measuring method.

A content of the SBR when compounded in 100% by mass of the rubber component is not particularly limited, and it can be, for example, 5% by mass or more, 10% by mass or more, 15% by mass or more, or 20% by mass or more. Moreover, the content of the SBR is preferably 80% by mass or less, more preferably 70% by mass or less, further preferably 60% by mass or less.

(Other rubber components)

The rubber component may comprise rubber components other than diene-based rubbers as long as they do not affect the effects of the present disclosure. As other rubber components, cross-linkable rubber components commonly used in the tire industry can be used, examples of which include, for example, a butyl rubber (IIR), a halogenated butyl rubber, an ethylene-propylene rubber, a polynorbornene rubber, a silicone rubber, a polyethylene chloride rubber, a fluorine rubber (FKM), an acrylic rubber (ACM), a hydrin rubber, and the like. These other rubber components may be used alone, or two or more thereof may be used in combination.

<Filler>

The rubber composition according to the present disclosure preferably comprises silica as a filler, and more preferably comprises carbon black and silica. Moreover, the filler may be a reinforcing filler consisting of carbon black and silica.

(Silica)

Silica is not particularly limited, and those common in the tire industry can be used, such as, for example, silica prepared by a dry process (anhydrous silica) and silica prepared by a wet process (hydrous silica). Among them, hydrous silica prepared by a wet process is preferable from the reason that it has many silanol groups. These silica may be used alone, or two or more thereof may be used in combination.

A nitrogen adsorption specific surface area ($N_2SA$) of silica is preferably 140 m$^2$/g or more, more preferably 150 m$^2$/g or more, further preferably 160 m$^2$/g or more, particularly preferably 170 m$^2$/g or more, from the viewpoint of securing reinforcing property and damping property at the tread part. Moreover, it is preferably 350 m$^2$/g or less, more preferably 300 m$^2$/g or less, further preferably 250 m$^2$/g or less, from the viewpoints of heat generation and processability. Besides, the $N_2SA$ of silica is measured by the above-described measuring method.

An average primary particle size of silica is preferably 20 nm or less, more preferably 18 nm or less. A lower limit of the average primary particle size is, but not particularly limited to, preferably 1 nm or more, more preferably 3 nm or more, further preferably 5 nm or more. When the average primary particle size of silica is within the above-described ranges, silica dispersibility can be further improved, and reinforcing property, fracture characteristics, and abrasion resistance can be further improved. Besides, the average primary particle size of silica is measured by the above-described measuring method.

A content of silica based on 100 parts by mass of the rubber component is preferably 30 parts by mass or more, more preferably 40 parts by mass or more, further preferably 50 parts by mass or more, particularly preferably 55 parts by mass or more, from the viewpoints of securing damping property at the tread part and wet grip performance. Moreover, it is preferably 110 parts by mass or less, more preferably 100 parts by mass or less, further preferably 95 parts by mass or less, particularly preferably 90 parts by mass or less, from the viewpoint of reducing the specific gravity of the rubber to reduce the weight.

(Carbon black)

Carbon black is not particularly limited, and, for example, those commonly used in the tire industry such as GPF, FEF, HAF, ISAF, and SAF can be used. These carbon black may be used alone, or two or more thereof may be used in combination.

A nitrogen adsorption specific surface area ($N_2SA$) of carbon black is preferably 50 $m^2$/g or more, more preferably 80 $m^2$/g or more, further preferably 100 $m^2$/g or more, from the viewpoints of weather resistance and reinforcing property. Moreover, it is preferably 250 $m^2$/g or less, more preferably 220 $m^2$/g or less, from the viewpoints of dispersibility, fuel efficiency, fracture characteristics, and durability. Besides, the $N_2SA$ of carbon black is measured by the above-described measuring method.

A content of carbon black when compounded based on 100 parts by mass of the rubber component is preferably 1 parts by mass or more, more preferably 3 parts by mass or more, further preferably 5 parts by mass or more, from the viewpoints of weather resistance and reinforcing property. Moreover, it is preferably 30 parts by mass or less, more preferably 25 parts by mass or less, further preferably 20 parts by mass or less, particularly preferably 15 parts by mass or less, from the viewpoint of fuel efficiency.

(Other fillers)

As fillers other than silica and carbon black, those commonly used in the tire industry can be compounded, such as aluminum hydroxide, calcium carbonate, alumina, clay, and talc.

A ratio of a content of carbon black to a content of silica is preferably 0.40 or less, more preferably 0.30 or less, further preferably 0.21 or less, further preferably 0.17 or less, further preferably 0.13 or less, particularly preferably 0.10 or less. When the ratio of the content of carbon black to the content of silica is within the above-described ranges, wet grip performance can be further improved. On the other hand, a lower limit value of the ratio of the content of carbon black to the content of silica is not particularly limited, and it can be, for example, 0.01 or more, 0.02 or more, or 0.05 or more, in which the filler may not comprise carbon black.

A total content of fillers based on 100 parts by mass of the rubber component is preferably 40 parts by mass or more, more preferably 50 parts by mass or more, further preferably 55 parts by mass or more, particularly preferably 60 parts by mass or more, from the viewpoint of securing reinforcing property and damping property at the tread part. It is preferably 120 parts by mass or less, more preferably 110 parts by mass or less, further preferably 100 parts by mass or less, particularly preferably 95 parts by mass or less, from the viewpoint of the effects of the present disclosure.

(Silane coupling agent)

Silica is preferably used in combination with a silane coupling agent. The silane coupling agent is not particularly limited, and any silane coupling agent conventionally used in combination with silica in the tire industry can be used, examples of which include, for example, mercapto-based silane coupling agents such as 3-mercaptopropyltrimethoxysilane, 3-mercaptopropyltriethoxysilane, 2-mercaptoethyltrimethoxysilane, and 2-mercaptoethyltriethoxysilane; sulfide-based silane coupling agents such as bis(3-triethoxysilylpropyl)disulfide and bis(3-triethoxysilylpropyl)tetrasulfide; thioester-based silane coupling agents such as 3-octanoylthio-1-propyltriethoxysilane, 3-hexanoylthio-1-propyltriethoxysilane, and 3-octanoylthio-1-propyltrimethoxysilane; vinyl-based silane coupling agents such as vinyltriethoxysilane and vinyltrimethoxysilane; amino-based silane coupling agents such as 3-aminopropyltriethoxysilane, 3-aminopropyltrimethoxysilane, and 3-(2-aminoethyl)aminopropyltriethoxysilane; glycydoxy-based silane coupling agents such as γ-glycidoxypropyltriethoxysilane and γ-glycidoxypropyltrimethoxysilane; nitro-based silane coupling agents such as 3-nitropropyltrimethoxysilane and 3-nitropropyltriethoxysilane; chloro-based silane coupling agents such as 3-chloropropyltrimethoxysilane and 3-chloropropyltriethoxysilane; and the like. Among them, sulfide-based silane coupling agents and/or mercapto-based silane coupling agents are preferably compounded. As the silane coupling agent, for example, those commercially available from Momentive Performance Materials, etc. can be used. These silane coupling agents may be used alone, or two or more thereof may be used in combination.

A content of the silane coupling agent based on 100 parts by mass of silica is preferably 1.0 parts by mass or more, more preferably 3.0 parts by mass or more, further preferably 5.0 parts by mass or more, from the viewpoint of enhancing dispersibility of silica. Moreover, it is preferably 30 parts by mass or less, more preferably 20 parts by mass or less, further preferably 15 parts by mass or less, from the viewpoint of preventing deterioration of abrasion resistance.

<Recycled rubber, powdered rubber>

The rubber composition according to the present disclosure preferably comprises at least one selected from a group consisting of a recycled rubber and a powdered rubber. A rubber composition comprising a recycled rubber or a powdered rubber usually has a problem that elongation at break, etc. easily deteriorate. However, in the present disclosure, when the rubber component comprises a rubber comprising a styrene part (a styrene-butadiene rubber, etc.) and an aromatic ring-containing resin, the rubber comprising the styrene part is compatible with the aromatic ring-containing resin, and therefore, it is considered that, due to the effect of the compatibility between the rubber comprising the styrene part and the aromatic ring-containing resin, a problem of deterioration in elongation at break, etc. is unlikely to occur even if the recycled rubber or powdered rubber is compounded.

A type of the recycled rubber may be any of a tube recycled rubber, a tire recycled rubber, and other recycled rubbers, and a plurality of these types may be combined. Among them, a tire recycled rubber is preferable.

As the recycled rubber, those obtained by a known producing method can be used, and, for example, the most common pan method (oil method), as well as a method with a Banbury mixer/twin-screw reaction extruder, a microwave method, an ultrasonic method, an ultrasonic wave method, an electron beam irradiation method, and the like have been developed, but those produced by any method may be used. Moreover, commercially available recycled rubbers may be used. One of specific examples for producing a recycled rubber is a method of charging a vulcanized rubber powder into a closed type mixer or extruder, heating it to 100 to 250°C, treating it for 5 to 50 minutes while applying a mechanical shearing force to desulfurize it for recycling. As commercially available products, for example, those manufactured and sold by Muraoka Rubber Reclaiming Co., Ltd., ASAHI SAISEIGOMU Co., Ltd., etc. can be used.

A content ratio of the natural rubber in the recycled rubber is preferably 40% by mass or more, more preferably 50% by mass or more, further preferably 60% by mass or more. When the content ratio of the natural rubber in the recycled rubber is within the above-described ranges, a good elongation at break tends to be obtained.

The recycled rubber can be used alone, or two or more thereof can be used in combination.

A content of the recycled rubber when compounded based on 100 parts by mass of the rubber component is preferably 1 parts by mass or more, more preferably 5 parts by mass or more, further preferably 10 parts by mass or more, from the viewpoint of consideration for the environment. Moreover, the content is preferably 30 parts by mass or less, more preferably 20 parts by mass or less, further preferably 15 parts by mass or less, from the viewpoint that the effects of the present disclosure are easily exhibited.

The powdered rubber is a vulcanized powdered rubber obtained by recycling a waste rubber product, but as a waste rubber used as a raw material of the powdered rubber, a rubber type of the waste rubber is not particularly limited, examples of which include diene-based rubbers such as a NR, a SBR, a BR, and an IR. Besides, as the powdered rubber, a 30-mesh pass product or a 40-mesh pass product in Tyler mesh can be used. The powdered rubber can be used alone, or two or more thereof can be used in combination.

An average particle size of the powdered rubber is preferably 70 $\mu$m or more, more preferably 100 $\mu$m or more. The average particle size is preferably 1 mm or less, more preferably 750 $\mu$m or less. Besides, the average particle size of the powdered rubber is measured by the above-described measuring method.

A content ratio of the natural rubber in the powdered rubber is preferably 40% by mass or more, more preferably 50% by mass or more, further preferably 60% by mass or more. When the content ratio of the natural rubber in the powdered rubber is within the above-described ranges, a good elongation at break tends to be obtained.

As the powdered rubber, for example, those manufactured and sold by Muraoka Rubber Reclaiming Co., Ltd., ASAHI SAISEIGOMU Co., Ltd., Lehigh Technologies, etc. can be used. The powdered rubber can be used alone, or two or more thereof can be used in combination.

A content of the powdered rubber when compounded based on 100 parts by mass of the rubber component is preferably 1 parts by mass or more, more preferably 5 parts by mass or more, further preferably 10 parts by mass or more, from the viewpoint of consideration for the environment. Moreover, the content is preferably 30 parts by mass or less, more preferably 20 parts by mass or less, further preferably 15 parts by mass or less, from the viewpoint that the effects of the present disclosure are easily exhibited.

A total content of the recycled rubber and the powdered rubber based on 100 parts by mass of the rubber component is preferably 5 parts by mass or more, more preferably 10 parts by mass or more, further preferably 15 parts by mass or more, from the viewpoint of consideration for the environment. Moreover, the content is preferably 50 parts by mass or less, more preferably 40 parts by mass or less, further preferably 30 parts by mass or less, from the viewpoint that the effects of the present disclosure are easily exhibited.

<Silicone, silicone-based polyurethane, and fluorine-based polyurethane>

The rubber composition according to the present disclosure preferably comprises at least one selected from a group consisting of silicone, a silicone-based polyurethane, and a fluorine-based polyurethane. Silicone is not particularly limited as long as it is a compound having organopolysiloxane as a main chain, specific examples of which include polydimethylsiloxane, methylhydrogenpolysiloxane, methylphenylpolysiloxane, diphenylpolysiloxane, a dimethylsilicone raw rubber, a methylvinyl silicone raw rubber, a methylphenyl silicone raw rubber, a fluorosilicone raw rubber, and the like. Among them, a silicone modified with a reactive functional group and a silicone having a polyether group are preferable from the viewpoint of the effects of the present disclosure.

Specific examples of the reactive functional group of the silicone modified with a reactive functional group include a hydroxyl group, an amino group, a mercapto group, a carboxyl group, an acid anhydride group, an epoxy group, a silanol group, an alkoxysilyl group, an acetoxysilyl group, an isocyanate group, a (meth)acryloyl group, an allyl group, and the like. Among them, a silicone modified with one or more functional groups selected from a group consisting of a hydroxyl group, an amino group, a carboxyl group, an epoxy group, a silanol group, an alkoxysilyl group, and an acetoxysilyl group is preferable, and a silicone both ends of which are modified with silanol groups is more preferable. As the silicone having a polyether group, a silicone having a polyether group at its side chain is preferable.

The silicone-based polyurethane can be obtained from the silicone having two or more hydroxyl groups and isocyanate, and a chain extender can be used as necessary.

Examples of isocyanate that is a raw material for the silicone-based polyurethane include, for example, tolylene diisocyanate (TDI), diphenylmethane diisocyanate (MDI), naphthalene diisocyanate (NDI), tolidine diisocyanate (TODI), hexamethylene diisocyanate (HDI), isophorone diisocyanate (IPDI), phenylene diisocyanate (PPDI), xylylene diisocyanate (XDI), tetramethylxylylene diisocyanate (TMXDI), cyclohexane diisocyanate, and mixtures thereof, and tolylene diisocyanate and 4,4'-diphenylmethane diisocyanate are preferable.

Examples of the chain extender that is a raw material for the silicone-based polyurethane, include polyether polyol, polyester polyol, polycarbonate polyol, polyolefin polyol, acrylic polyol, and mixtures thereof, and polyether polyol is preferable. Examples of polyether polyol include, for example, polyoxyethylene diol (polyethylene glycol), polyoxypropylene diol (polypropylene glycol: PPG), polyoxypropylene triol, ethylene oxide/propylene oxide copolymer, polytetramethylene ether glycol (PTMEG), polyoxyalkylene polyol like polytetraethylene glycol; sorbitol-based polyols, and the like.

The fluorine-based polyurethane can be obtained from a fluorine-based resin having two or more hydroxyl groups and isocyanate, and a chain extender can be used as necessary.

Examples of the fluorine-based resin that is a raw material for the fluorine-based polyurethane include polytetrafluoroethylene (PTFE), tetrafluoroethylene-hexafluoropropylene copolymer (FEP), tetrafluoroethylene-perfluoro(alkyl vinyl ether) copolymer (PFA), tetrafluoroethylene-hexafluoropropylene-perfluoro(propyl vinyl ether) terpolymer (EPE), polychlorotrifluoroethylene (PCTFE), polyvinylidene fluoride (PVDF), ethylene-tetrafluoroethylene alternating copolymer (ETFE), ethylene-chlorotrifluoroethylene alternating copolymer (ECTFE), polyvinyl fluoride (PVF), and mixtures thereof.

As isocyanate that is a raw material for the fluorine-based polyurethane, one exemplified as the isocyanate that is a raw material for the silicone-based polyurethane can be used in the same manner.

As the chain extender that is a raw material for the fluorine-based polyurethane, one exemplified as the chain extender that is a raw material for the silicone-based polyurethane can be used in the same manner.

A total content of silicone, the silicone-based polyurethane, and the fluorine-based polyurethane based on 100 parts by mass of the rubber component is preferably 5 parts by mass or more, more preferably 10 parts by mass or more, further preferably 15 parts by mass or more, from the viewpoint of the effects of the present disclosure. Moreover, the content is preferably 50 parts by mass or less, more preferably 40 parts by mass or less, further preferably 30 parts by mass or less, from the viewpoint that the effects of the present disclosure are easily exhibited.

<Resin component>

The rubber composition according to the present disclosure preferably comprises, as a resin component, at least one selected from a group consisting of a terpene-based resin and a cyclopentadiene-based resin.

The terpene-based resin and the cyclopentadiene-based resin are characterized by a lower SP value than other adhesive resins used for a rubber composition for tire, such as a coumarone resin, a petroleum-based resin (an aliphatic petroleum resin, an aromatic petroleum resin, an alicyclic petroleum resin, etc.), a phenol-based resin, and a rosin derivative. Here, the SP value means a solubility parameter calculated by the Hoy method based on a structure of a compound, showing that the further the SP values of two compounds are apart from each other, the lower the compatibility is. Here, a SP value of water is about 23, and SP values of other adhesive resins are about 9 to 12, and therefore, a terpene resin with a lower SP value than other adhesive resins is an adhesive resin with a lower compatibility with water, which is compounded in rubber composition, so that water repellency of the rubber composition can be improved.

Examples of the terpene-based resin include terpene-based resins (terpene-based resins that are not hydrogenated) such as a polyterpene resin consisting of at least one selected from terpene raw materials such as α-pinene, β-pinene, limonene, and a dipentene, an aromatic-modified terpene resin made from a terpene compound and an aromatic compound, a terpene phenol resin made from a terpene compound and a phenol-based compound, and those in which these terpene-based resins are hydrogenated (hydrogenated terpene-based resins). Here, examples of the aromatic compound used as a raw material for the aromatic-modified terpene resin include, for example, styrene, α-methylstyrene, vinyltoluene, divinyltoluene, and the like, and examples of the phenol-based compound used as a raw material for the terpene phenol resin include, for example, phenol, bisphenol A, cresol, xylenol, and the like.

Among terpene-based resins, hydrogenated terpene-based resins are preferable because they have a lower SP value, a good compatibility with rubber components, and can improve water repellency, and a hydrogenated polyterpene resin is more preferable because it allows for hydrogen addition close to 100% and further has a good durability. Hydrogenation treatment to the terpene-based resin can be performed by a known method, and commercially available hydrogenated terpene-based resins can also be used in the present disclosure.

A SP value of the terpene-based resin is preferably 8.6 or less, more preferably 8.5 or less, because it can further improve in water repellency of the rubber composition. A lower limit of the SP value of the terpene-based resin is preferably 7.5 or more from the viewpoint of compatibility with rubber components.

A SP value of the cyclopentadiene-based resin is preferably 8.5 or less, more preferably 8.4 or less, because it can further improve water repellency of the rubber composition. A lower limit of the SP value of the cyclopentadiene-based resin is preferably 7.9 or more from the viewpoint of compatibility with rubber components.

A total content of the terpene-based resin and the cyclopentadiene-based resin based on 100 parts by mass of the rubber component is preferably 5 parts by mass or more, more preferably 8 parts by mass or more, further preferably 15 parts by mass or more, from the viewpoint of the effects of the present disclosure. Moreover, the total content of the terpene-based resin and the cyclopentadiene-based resin is preferably 40 parts by mass or less, more preferably 30 parts by mass or less, from the viewpoint that hardness, moldability, and viscosity of the rubber composition can be appropriately secured.

Other resin components are not particularly limited, examples of which include a petroleum resin, a rosin-based resin, a phenol-based resin, and the like, which are commonly used in the tire industry. These resin components may be used alone, or two or more thereof may be used in combination.

A softening point of a resin component (preferably the terpene-based resin or the cyclopentadiene-based resin) is preferably 60°C or higher, more preferably 65°C or higher, from the viewpoint of wet grip performance. Moreover, it is preferably 150°C or lower, more preferably 140°C or lower, further preferably 130°C or lower, from the viewpoints of processability and improvement in dispersibility of a rubber component with a filler. Besides, the softening point of the resin component is measured by the above-described measuring method.

A content of the resin component when compounded based on 100 parts by mass of the rubber component is preferably 5 parts by mass or more, more preferably 8 parts by mass or more, further preferably 15 parts by mass or more, from the viewpoint of the effects of the present invention. Moreover, the total content of the terpene-based resin and the cyclopentadiene-based resin is preferably 40 parts by mass or less, more preferably 30 parts by mass or less, from the viewpoint that hardness, moldability, and viscosity of the rubber composition can be appropriately secured.

(Other compounding agents)

The rubber composition according to the present disclosure can appropriately comprise compounding agents conventionally and generally used in the tire industry, for example, oil, wax, processing aid, an antioxidant, stearic acid, zinc oxide, a vulcanizing agent such as sulfur, a vulcanization accelerator, and the like, in addition to the above-described components.

Examples of oil include, for example, a process oil, vegetable fats and oils, animal fats and oils, and the like. Examples of the process oil include a paraffin-based process oil, a naphthene-based process oil, an aroma-based process oil, and the like. In addition, as an environmental measure, examples of the process oil include a process oil having a low content of a polycyclic aromatic (PCA) compound. Examples of the process oil having a low content of a PCA include Treated Distillate Aromatic Extract (TDAE) in which an oil aromatic process oil is re-extracted, an aroma substitute oil which is a mixture of asphalt and a naphthenic oil, mild extraction solvates (MES), a heavy naphthenic oil, and the like.

A content of oil when compounded based on 100 parts by mass of the rubber component is preferably 10 parts by mass or more, more preferably 20 parts by mass or more, further preferably 30 parts by mass or more, particularly preferably 35 parts by mass or more, from the viewpoint of the effects of the present disclosure. Moreover, it is preferably 90 parts by mass or less, more preferably 80 parts by mass or less, further preferably 70 parts by mass or less, particularly preferably 60 parts by mass or less, from the viewpoints of fuel efficiency and durability.

A content of wax when compounded based on 100 parts by mass of the rubber component is preferably 0.5 parts by mass or more, more preferably 1 parts by mass or more, from the viewpoint of weather resistance of a rubber. Moreover, it is preferably 10 parts by mass or less, more preferably 5 parts by mass or less, from the viewpoint of preventing whitening of a tire due to bloom.

As processing aid, a fatty acid metal salt for the purpose of reducing viscosity of a rubber and securing releasability in an unvulcanized state, those widely and commercially available as a compatibilizer from the viewpoint of suppressing micro-layer separation of a rubber component, and the like can be used.

A content of processing aid when compounded based on 100 parts by mass of the rubber component is preferably 0.5 parts by mass or more, more preferably 1.0 parts by mass or more, further preferably 1.5 parts by mass or more, from the viewpoint of exhibiting an effect of improving processability. Moreover, it is preferably 10 parts by mass or less, more preferably 8.0 parts by mass or less, from the viewpoints of abrasion resistance and breaking strength.

Examples of the antioxidant include, but not particularly limited to, for example, amine-based, quinoline-based, quinone-based, phenol-based, and imidazole-based compounds, a carbamic acid metal salt, and the like.

A content of the antioxidant when compounded based on 100 parts by mass of the rubber component is preferably 0.5 parts by mass or more, more preferably 1.0 parts by mass or more, further preferably 1.5 parts by mass or more, from the viewpoint of ozone crack resistance of a rubber. Moreover, it is preferably 10 parts by mass or less, more preferably 5.0 parts by mass or less, from the viewpoints of abrasion resistance and wet grip performance.

A content of stearic acid when compounded based on 100 parts by mass of the rubber component is preferably 0.5 parts by mass or more, more preferably 1.0 parts by mass or more, further preferably 1.5 parts by mass or more, from the viewpoint of processability. Moreover, it is preferably 10 parts by mass or less, more preferably 5.0 parts by mass or less, from the viewpoint of vulcanization rate.

A content of zinc oxide when compounded based on 100 parts by mass of the rubber component is preferably 0.5 parts by mass or more, more preferably 1.0 parts by mass or more, further preferably 1.5 parts by mass or more, from the viewpoint of processability. Moreover, it is preferably 10 parts by mass or less, more preferably 5.0 parts by mass or less, from the viewpoint of abrasion resistance.

Sulfur is appropriately used as a vulcanizing agent. As sulfur, a powdery sulfur, an oil processing sulfur, a precipitated sulfur, a colloidal sulfur, an insoluble sulfur, a highly dispersible sulfur, and the like can be used.

A content of sulfur when compounded as a vulcanizing agent based on 100 parts by mass of the rubber component is preferably 0.1 parts by mass or more, more preferably 0.3 parts by mass or more, further preferably 0.5 parts by mass or more, from the viewpoint of securing a sufficient vulcanization reaction. Moreover, it is preferably 5.0 parts by mass or less, more preferably 4.0 parts by mass or less, further preferably 3.0 parts by mass or less, particularly preferably 2.5 parts by mass or less, from the viewpoint of preventing deterioration. Besides, a content of the vulcanizing agent when an oil-containing sulfur is used as the vulcanizing agent shall be a total content of pure sulfur comprised in the oil-containing sulfur.

Examples of vulcanizing agents other than sulfur include, for example, an alkylphenol-sulfur chloride condensate, sodium hexamethylene-1,6-bisthiosulfate dihydrate, 1,6-bis(N,N'-dibenzylthiocarbamoyldithio)hexane, and the like. As these vulcanizing agents other than sulfur, those commercially available from Taoka Chemical Co., Ltd., LANXESS, Flexsys, etc. can be used.

Examples of the vulcanization accelerator include, for example, sulfenamide-based, thiazole-based, thiuram-based, thiourea-based, guanidine-based, dithiocarbamic acid-based, aldehyde-amine-based or aldehyde-ammonia-based, imidazoline-based, and xantate-based vulcanization accelerators, and the like. These vulcanization accelerators may be used alone, or two or more thereof may be used in combination. Among them, one or more vulcanization accelerators selected from a group consisting of sulfenamide-based, guanidine-based, and thiazole-based vulcanization accelerators are preferable, and a combination of a sulfenamide-based vulcanization accelerator and a guanidine-based vulcanization accelerator is more preferable, from the viewpoint that a desired effect can be obtained more appropriately.

Examples of the sulfenamide-based vulcanization accelerator include, for example, N-tert-butyl-2-benzothiazolylsulfenamide (TBBS), N-cyclohexyl-2-benzothiazolylsulfenamide (CBS), N,N-dicyclohexyl-2-benzothiazolylsulfenamide (DCBS), and the like. Among them, N-tert-butyl-2-benzothiazolylsulfenamide (TBBS) and N-cyclohexyl-2-benzothiazolylsulfenamide (CBS) are preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatecholborate, 1,3-di-o-cumenylguanidine, 1,3-di-o-biphenylguanidine, 1,3-di-o-cumenyl-2-propionylguanidine, and the like. Among them, 1,3-diphenylguanidine (DPG) is preferable.

Examples of the thiazole-based vulcanization accelerator include, for example, 2-mercaptobenzothiazole, a cyclohexylamine salt of 2-mercaptobenzothiazole, di-2-benzothiazolyl disulfide, and the like. Among them, 2-mercaptobenzothiazole is preferable.

A content of the vulcanization accelerator when compounded based on 100 parts by mass of the rubber component is preferably 1.0 parts by mass or more, more preferably 1.5 parts by mass or more, further preferably 2.0 parts by mass or more. Moreover, the content of the vulcanization accelerator based on 100 parts by mass of the rubber component is preferably 8.0 parts by mass or less, more preferably 7.0 parts by mass or less, further preferably 6.0 parts by mass or less, particularly preferably 5.0 parts by mass or less. When the content of the vulcanization accelerator is within the above-described ranges, breaking strength and elongation tend to be secured.

The rubber composition according to the present disclosure can be produced by a known method. For example, it can be produced by kneading each of the above-described components using a rubber kneading apparatus such as an open roll and a closed type kneader (Bunbury mixer, kneader, etc.).

The kneading step includes, for example, a base kneading step of kneading compounding agents and additives other than vulcanizing agents and vulcanization accelerators and a final kneading (F kneading) step of adding vulcanizing agents and vulcanization accelerators to the kneaded product obtained by the base kneading step and kneading them. Furthermore, the base kneading step can be divided into a plurality of steps, if desired.

A kneading condition is not particularly limited. Examples of kneading include, for example, in the base kneading step, a method of kneading at a discharge temperature at 150 to 170°C for 3 to 10 minutes, and in the final kneading step, a method of kneading at 70 to 110°C for 1 to 5 minutes. A vulcanization condition is not particularly limited. Examples of vulcanization include, for example, a method of vulcanizing at 150 to 200°C for 10 to 30 minutes.

The tire of the present disclosure comprising the tread formed of the above-described rubber composition can be produced by a usual method. That is, the tire can be produced by extruding an unvulcanized rubber composition compounded from the rubber component and other components as necessary into a shape of at least one rubber layer of a tread, attaching it together with other tire members on a tire forming machine, and molding them by a usual method to form an unvulcanized tire, followed by heating and pressurizing this unvulcanized tire in a vulcanizing machine. A vulcanization condition is not particularly limited. Examples of vulcanization include, for example, a method of vulcanizing at 150 to 200°C for 10 to 30 minutes.

<Application>

The tire of the present disclosure can be appropriately used as a tire for a passenger car, a tire for a truck/bus, a tire for a two-wheeled vehicle, or a racing tire. Among them, it is preferably used as a tire for a passenger car. Besides, the tire for a passenger car is a tire on the premise that it is mounted on a car running on four wheels and refers to one having the maximum load capacity of 1000 kg or less. Moreover, the tire of the present disclosure can be used as an all-season tire, a summer tire, a winter tire such as a studless tire. Among them, it is preferably used as a winter tire.

EXAMPLE

Hereinafter, the present invention will be described based on Examples, though the present invention is not limited to these Examples.

Various chemicals used in Examples and Comparative examples are collectively shown below.

NR: TSR20

BR: Ubepol BR (Registered Trademark) 150B manufactured by Ube Industries, Ltd. (unmodified BR, cis content: 97 mol%, Mw: 440,000)

SBR: HPR850 manufactured by JSR Corporation (S-SBR, styrene content: 27.5% by mass, vinyl content: 59 mol%, non-oil-extended product)

Carbon black: Show Black N220 manufactured by Cabot Japan K.K. ($N_2SA$: 111 $m^2/g$)

Silica: Ultrasil (Registered Trademark) VN3 manufactured by Evonik Degussa GmbH ($N_2SA$: 175 $m^2/g$, average primary particle size: 17 nm)

Silane coupling agent: Si266 manufactured by Evonik Degussa GmbH (bis(3-triethoxysilylpropyl)disulfide)

Powdered rubber: Powder of powdered rubber W2-A (available from ASAHI SAISEIGOMU Co., Ltd.)

Recycled rubber: Recycled rubber having a content ratio of 73% by mass of a natural rubber (available from Muraoka Rubber Reclaiming Co., Ltd.)

Silicone 1: SS-10 manufactured by Shin-Etsu Chemical Co., Ltd. (both terminal silanol-modified polydimethylsiloxane)

Silicone 2: L-5345 manufactured by Momentive Performance Materials (silicone having a polyether group)

Resin component 1: P125 manufactured by Yasuhara Chemical Co., Ltd. (hydrogenated polyterpene resin, softening point: 125°C)

Resin component 2: Oppera PR-120 manufactured by ExxonMobil (hydrogenated dicyclopentadiene resin, softening point: 120°C)

Oil 1: VivaTec 400 manufactured by H&R Group (TDAE oil)

Oil 2: Mineral oil PW-380 manufactured by Idemitsu Kosan Co., Ltd.

Wax: OZOACE 0355 manufactured by Nippon Seiro Co., Ltd.

Antioxidant 1: Antigen 6C manufactured by Sumitomo Chemical Co., Ltd. (N-(1,3-dimethylbutyl)-N'-phenyl-p-phenylenediamine)

Antioxidant 2: Antigen RD manufactured by Sumitomo Chemical Co., Ltd. (2,2,4-trimethyl-1,2-dihydroquinoline polymer)

Zinc oxide: Zinc oxide No. 1 manufactured by Mitsui Mining & Smelting Co., Ltd.

Stearic acid: Bead stearic acid "CAMELLIA" manufactured by NOF CORPORATION

Sulfur: HK-200-5 manufactured by Hosoi Chemical Industry Co., Ltd. (5% oil-containing powdered sulfur)

Vulcanization accelerator 1: Nocceler CZ manufactured by Ouchi Shinko Chemical Industry Co., Ltd. (N-cyclohexyl-2-benzothiazolylsulfenamide (CBS))

Vulcanization accelerator 2: Nocceler D manufactured by Ouchi Shinko Chemical Industry Co., Ltd. (1,3-diphenylguanidine (DPG))

(Examples and Comparative examples)

According to the compounding formulations shown in Tables 1 and 2, using a 1.7 L closed Banbury mixer, all chemicals other than sulfur and vulcanization accelerators were kneaded until a temperature reached a discharge temperature at 150°C to 160°C for 1 to 10 minutes to obtain a kneaded product. Next, using a twin-screw open roll, sulfur and vulcanization accelerators were added to the obtained kneaded product, and the mixture was kneaded for 4 minutes until the temperature reached 105°C to obtain an unvulcanized rubber composition. The obtained unvulcanized rubber composition was press-vulcanized at 170°C for 12 minutes to produce a test vulcanized rubber composition described in Tables 1 and 2.

Moreover, the obtained unvulcanized rubber composition was used to be extruded into a shape of a tread (thickness: 8.5 mm) with an extruder equipped with a mouthpiece having a predetermined shape and attached together with other tire members to prepare an unvulcanized tire, and the unvulcanized tire was press-vulcanized under a condition of 170°C for 12 minutes to produce each test tire described in Tables 1 and 2.

The obtained test vulcanized rubber composition and the test tire were evaluated as follows. The evaluation results are shown in Tables 1 and 2.

<Measurement of contact angle>

Each rubber specimen after vulcanization was cut out with 20 mm in length $\times$ 30 mm in width $\times$ 2 mm in thickness from a tread part of each test tire so that a tire circumferential direction is on a long side. 2.0 $\mu$L of pure water was dropped onto a surface of each rubber specimen held horizontally, and each angle (contact angle $\theta$) defined by an end of a droplet after 180 seconds of dropping with a surface of a rubber composition was measured using a contact angle meter DMs-401 manufactured by Kyowa Interface Science Co., Ltd.

<Measurement of tan $\delta$ and complex elastic modulus E*>

Each rubber specimen after vulcanization was cut out with 20 mm in length $\times$ 4 mm in width $\times$ 1 mm in thickness from a tread part of each test tire so that a tire circumferential direction is on a long side. For each rubber specimen, using a dynamic viscoelasticity measuring device (EPLEXOR series manufactured by gabo Systemtechnik GmbH), a tan $\delta$ and a complex elastic modulus (E*) were measured under a condition of temperature at 0°C, an initial strain of 10%, a dynamic strain of 2.5%, and a frequency of 10 Hz. The results are shown in Tables 1 and 2. Besides, a thickness direction of a sample was defined as a tire radial direction.

<Wet grip performance>

Each test tire was filled with 250 kPa of air, mounted on all wheels of an automobile with a displacement of 2000 cc, and put on the brake during running at an initial speed of 100 km/h on a wet asphalt road surface to measure a braking distance. An inverse value of the braking distance was indicated as an index with the braking distance of the reference Comparative example (Comparative example 5 in Table 1, Comparative example 10 in Table 2) being as 100. The results show that the larger the index is, the better the wet grip performance during high-speed running is.

<On-ice performance>

Each test tire was filled with 250 kPa of air, and an actual vehicle performance on ice was evaluated under the following condition. The test was conducted at the Nayoro Tire Proving Ground, Hokkaido in Sumitomo Rubber Industries, Ltd., where a temperature was 0 to -5°C. The tire was mounted on an FR vehicle with a displacement of 2000 cc, and a stopping distance on ice required until the vehicle was put on the brake at a speed of 30 km/h to stop was measured. An inverse value of the stopping distance was indicated as an index with the braking distance of the reference Comparative example (Comparative example 5 in Table 1, Comparative example 10 in Table 2) being as 100. The results show that the larger the index is, the better the on-ice performance is.

Table 1

EP 4 201 706 A1

| | Example | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| **Compounding amount (part by mass)** | | | | | | | | | | | | |
| NR | 45 | 45 | 45 | 45 | 45 | 45 | 45 | 45 | 45 | 45 | 45 | 45 |
| BR | 55 | 55 | 55 | 55 | 55 | 55 | 55 | 55 | 55 | 55 | 15 | 55 |
| SBR | - | - | - | - | - | - | - | - | - | - | 40 | - |
| Carbon black | 30 | 15 | 15 | 15 | 15 | 15 | 15 | 15 | 15 | 5.0 | 5.0 | 15 |
| Silica | 40 | 55 | 55 | 55 | 55 | 55 | 55 | 55 | 55 | 65 | 65 | 55 |
| Silane coupling agent | 3.2 | 3.2 | 3.2 | 3.2 | 3.2 | 3.2 | 3.2 | 3.2 | 3.2 | 3.2 | 3.2 | 3.2 |
| Silicone 1 | 10 | 10 | 10 | 15 | 20 | - | - | - | 10 | 20 | 20 | 20 |
| Silicone 2 | - | - | - | - | - | 20 | - | - | - | | | |
| Resin component 1 | - | - | - | - | - | - | 20 | - | 10 | | | |
| Resin component 2 | - | - | - | - | - | - | - | 20 | - | | | |
| Oil 1 | 30 | 30 | 30 | 30 | 30 | 30 | 30 | 30 | 30 | 30 | 30 | 30 |
| Oil 2 | 10 | 10 | 10 | 10 | 10 | 10 | 10 | 10 | 10 | 10 | 10 | 10 |
| Wax | 1.5 | 1.5 | 1.5 | 1.5 | 1.5 | 1.5 | 1.5 | 1.5 | 1.5 | 1.5 | 1.5 | 1.5 |
| Antioxidant 1 | 2.0 | 2.0 | 2.0 | 2.0 | 2.0 | 2.0 | 2.0 | 2.0 | 2.0 | 2.0 | 2.0 | 2.0 |
| Antioxidant 2 | 1.0 | 1.0 | 1.0 | 1.0 | 1.0 | 1.0 | 1.0 | 1.0 | 1.0 | 1.0 | 1.0 | 1.0 |
| Zinc oxide | 2.0 | 2.0 | 2.0 | 2.0 | 2.0 | 2.0 | 2.0 | 2.0 | 2.0 | 2.0 | 2.0 | 2.0 |
| Stearic acid | 2.0 | 2.0 | 2.0 | 2.0 | 2.0 | 2.0 | 2.0 | 2.0 | 2.0 | 2.0 | 2.0 | 2.0 |
| Sulfur | 1.0 | 1.0 | 1.0 | 1.0 | 1.0 | 1.0 | 1.0 | 1.0 | 1.0 | 1.0 | 1.0 | 1.0 |
| Vulcanization accelerator 1 | 1.5 | 1.5 | 1.5 | 1.5 | 1.5 | 1.5 | 1.5 | 1.5 | 1.5 | 1.5 | 1.5 | 1.5 |
| Vulcanization accelerator 2 | 2.5 | 2.5 | 2.5 | 2.5 | 2.5 | 2.5 | 2.5 | 2.5 | 2.5 | 2.5 | 2.5 | 2.5 |
| **Rubber layer** | | | | | | | | | | | | |
| Contact angle $\theta$ (°) | 107 | 105 | 105 | 109 | 116 | 115 | 105 | 106 | 107 | 114 | 114 | 116 |
| 0°C tan $\delta$ | 0.27 | 0.25 | 0.25 | 0.26 | 0.27 | 0.28 | 0.34 | 0.35 | 0.27 | 0.25 | 0.25 | 0.27 |
| 0°C E* (MPa) | 8.5 | 8.0 | 8.0 | 7.8 | 7.6 | 8.0 | 7.7 | 7.9 | 7.6 | 7.2 | 7.2 | 7.6 |
| 0°C tan $\delta$/0°C E* | 0.032 | 0.031 | 0.031 | 0.031 | 0.033 | 0.035 | 0.044 | 0.044 | 0.033 | 0.035 | 0.035 | 0.033 |

(continued)

| | Example | | | | | | | | | | | | Comparative example | | | | |
|---|---|---|---|---|---|---|---|---|---|---|---|---|---|---|---|---|---|
| | 1 | 2 | 3 | 4 | 5 | 6 | 7 | 8 | 9 | 10 | 11 | 12 | 1 | 2 | 3 | 4 | 5 |
| **Tire** | | | | | | | | | | | | | | | | | |
| Groove depth H (mm) | 9.0 | 9.0 | 8.5 | 8.5 | 8.5 | 8.5 | 8.5 | 8.5 | 8.5 | 8.5 | 8.5 | 8.5 | | | | | |
| G (kg) | 8.4 | 8.4 | 7.9 | 7.9 | 7.9 | 7.9 | 7.9 | 7.9 | 7.9 | 7.9 | 7.9 | 7.9 | | | | | |
| $W_L$ (kg) | 534 | 534 | 534 | 534 | 534 | 534 | 534 | 534 | 534 | 534 | 534 | 534 | | | | | |
| $G/W_L$ | 0.0157 | 0.0157 | 0.0148 | 0.0148 | 0.0148 | 0.0148 | 0.0148 | 0.0148 | 0.0148 | 0.0148 | 0.0148 | 0.0148 | | | | | |
| $L_0/L_{90}$ | 0.90 | 0.90 | 0.90 | 0.90 | 0.90 | 0.90 | 0.90 | 0.90 | 0.90 | 0.90 | 0.90 | 1.00 | | | | | |
| $\theta/G$ | 12.7 | 12.5 | 13.3 | 13.8 | 14.7 | 14.6 | 13.3 | 13.4 | 13.5 | 13.4 | 13.4 | 13.6 | | | | | |
| **Index** | | | | | | | | | | | | | | | | | |
| Wet grip performance | 110 | 113 | 115 | 117 | 120 | 119 | 115 | 115 | 116 | 119 | 115 | 120 | | | | | |
| On-ice performance | 105 | 106 | 107 | 108 | 110 | 110 | 109 | 109 | 109 | 110 | 109 | 111 | | | | | |
| **Compounding amount (part by mass)** | | | | | | | | | | | | | | | | | |
| NR | | | | | | | | | | | | | 45 | 45 | 45 | 45 | 45 |
| BR | | | | | | | | | | | | | 55 | 55 | 55 | 55 | 55 |
| SBR | | | | | | | | | | | | | - | - | - | - | - |
| Carbon black | | | | | | | | | | | | | 30 | 30 | 30 | 15 | 15 |
| Silica | | | | | | | | | | | | | 40 | 40 | 40 | 55 | 55 |
| Silane coupling agent | | | | | | | | | | | | | 3.2 | 3.2 | 3.2 | 3.2 | 3.2 |
| Silicone 1 | | | | | | | | | | | | | - | - | 5.0 | - | - |
| Silicone 2 | | | | | | | | | | | | | - | - | - | - | - |
| Resin component 1 | | | | | | | | | | | | | - | - | - | - | - |
| Resin component 2 | | | | | | | | | | | | | - | - | - | - | - |
| Oil 1 | | | | | | | | | | | | | 30 | 30 | 30 | 30 | 30 |
| Oil 2 | | | | | | | | | | | | | 10 | 10 | 10 | 10 | 10 |
| Wax | | | | | | | | | | | | | 1.5 | 1.5 | 1.5 | 1.5 | 1.5 |
| Antioxidant 1 | | | | | | | | | | | | | 2.0 | 2.0 | 2.0 | 2.0 | 2.0 |
| Antioxidant 2 | | | | | | | | | | | | | 1.0 | 1.0 | 1.0 | 1.0 | 1.0 |
| Zinc oxide | | | | | | | | | | | | | 2.0 | 2.0 | 2.0 | 2.0 | 2.0 |

(continued)

| | Comparative example | | | | |
|---|---|---|---|---|---|
| | 1 | 2 | 3 | 4 | 5 |
| **Compounding amount (part by mass)** | | | | | |
| Stearic acid | 2.0 | 2.0 | 2.0 | 2.0 | 2.0 |
| Sulfur | 1.0 | 1.0 | 1.0 | 1.0 | 1.0 |
| Vulcanization accelerator 1 | 1.5 | 1.5 | 1.5 | 1.5 | 1.5 |
| Vulcanization accelerator 2 | 2.5 | 2.5 | 2.5 | 2.5 | 2.5 |
| **Rubber layer** | | | | | |
| Contact angle $\theta$ (°) | 103 | 103 | 105 | 101 | 101 |
| 0°C tan $\delta$ | 0.23 | 0.23 | 0.24 | 0.23 | 0.23 |
| 0°C E* (MPa) | 9.4 | 9.4 | 9.0 | 9.4 | 9.4 |
| 0°C tan $\delta$/0°C E* | 0.024 | 0.024 | 0.027 | 0.024 | 0.024 |

| | Comparative example | | | | |
|---|---|---|---|---|---|
| | 1 | 2 | 3 | 4 | 5 |
| **Tire** | | | | | |
| Groove depth H (mm) | 10.0 | 9.0 | 10.0 | 10.0 | 8.5 |
| G (kg) | 8.6 | 8.4 | 8.6 | 7.8 | 7.8 |
| $W_L$ (kg) | 534 | 534 | 534 | 534 | 534 |
| $G/W_L$ | 0.0161 | 0.0157 | 0.0161 | 0.0161 | 0.0146 |
| $L_0/L_{90}$ | 0.90 | 0.90 | 0.90 | 0.90 | 0.90 |
| $\theta$/G | 12.0 | 12.0 | 12.2 | 11.7 | 12.9 |
| **Index** | | | | | |
| Wet grip performance | 94 | | 95 | | 97 |
| On-ice performance | 95 | | 96 | | 98 |

Table 2

| | Example | | | | | | | | | | | |
|---|---|---|---|---|---|---|---|---|---|---|---|---|
| | 13 | 14 | 15 | 16 | 17 | 18 | 19 | 20 | 21 | 22 | 23 | 24 |
| **Compounding amount (part by mass)** | | | | | | | | | | | | |
| NR | 45 | 45 | 45 | 45 | 45 | 45 | 45 | 45 | 45 | 45 | 45 | 45 |
| BR | 55 | 55 | 55 | 55 | 55 | 55 | 55 | 55 | 55 | 55 | 55 | 55 |
| Carbon black | 30 | 15 | 15 | 15 | 15 | 15 | 15 | 15 | 15 | 5.0 | 15 | 15 |
| Silica | 40 | 55 | 55 | 55 | 55 | 55 | 55 | 55 | 55 | 65 | 55 | 55 |
| Silane coupling agent | 3.2 | 3.2 | 3.2 | 3.2 | 3.2 | 3.2 | 3.2 | 3.2 | 3.2 | 3.2 | 3.2 | 3.2 |
| Powdered rubber | 10 | 10 | 10 | 10 | 10 | 10 | 10 | 10 | 10 | 10 | 10 | - |
| rubber | - | - | - | - | - | - | - | - | - | - | - | 10 |
| Silicone 1 | 10 | 10 | 10 | 15 | 20 | - | - | - | 10 | 20 | 20 | 20 |
| Silicone 2 | - | - | - | - | - | 20 | - | - | - | | | |
| Resin component 1 | - | - | - | - | - | - | 20 | - | - | | | |
| Resin component 2 | - | - | - | - | - | - | - | 20 | 10 | | | |
| Oil 1 | 30 | 30 | 30 | 30 | 30 | 30 | 30 | 30 | 30 | 30 | 30 | 30 |
| Oil 2 | 10 | 10 | 10 | 10 | 10 | 10 | 10 | 10 | 10 | 10 | 10 | 10 |
| Wax | 1.5 | 1.5 | 1.5 | 1.5 | 1.5 | 1.5 | 1.5 | 1.5 | 1.5 | 1.5 | 1.5 | 1.5 |
| Antioxidant 1 | 2.0 | 2.0 | 2.0 | 2.0 | 2.0 | 2.0 | 2.0 | 2.0 | 2.0 | 2.0 | 2.0 | 2.0 |
| Antioxidant 2 | 1.0 | 1.0 | 1.0 | 1.0 | 1.0 | 1.0 | 1.0 | 1.0 | 1.0 | 1.0 | 1.0 | 1.0 |
| Zinc oxide | 2.0 | 2.0 | 2.0 | 2.0 | 2.0 | 2.0 | 2.0 | 2.0 | 2.0 | 2.0 | 2.0 | 2.0 |
| Stearic acid | 2.0 | 2.0 | 2.0 | 2.0 | 2.0 | 2.0 | 2.0 | 2.0 | 2.0 | 2.0 | 2.0 | 2.0 |
| Sulfur | 1.0 | 1.0 | 1.0 | 1.0 | 1.0 | 1.0 | 1.0 | 1.0 | 1.0 | 1.0 | 1.0 | 1.0 |
| Vulcanization accelerator 1 | 1.5 | 1.5 | 1.5 | 1.5 | 1.5 | 1.5 | 1.5 | 1.5 | 1.5 | 1.5 | 1.5 | 1.5 |
| Vulcanization accelerator 2 | 2.5 | 2.5 | 2.5 | 2.5 | 2.5 | 2.5 | 2.5 | 2.5 | 2.5 | 2.5 | 2.5 | 2.5 |
| **Rubber layer** | | | | | | | | | | | | |
| Contact angle θ (°) | 109 | 107 | 107 | 111 | 118 | 117 | 107 | 108 | 109 | 116 | 116 | 117 |
| 0°C tan δ | 0.28 | 0.26 | 0.26 | 0.27 | 0.28 | 0.29 | 0.35 | 0.36 | 0.28 | 0.26 | 0.26 | 0.27 |
| 0°C E* (MPa) | 9.0 | 8.4 | 8.5 | 8.2 | 8.0 | 8.5 | 8.2 | 8.3 | 8.2 | 7.7 | 7.7 | 8.0 |
| 0°C tan δ/0°C E* | 0.031 | 0.031 | 0.031 | 0.033 | 0.035 | 0.034 | 0.043 | 0.043 | 0.034 | 0.034 | 0.034 | 0.034 |

(continued)

| | Example | | | | | | | | | | | | Comparative example | | | | |
|---|---|---|---|---|---|---|---|---|---|---|---|---|---|---|---|---|---|
| | 13 | 14 | 15 | 16 | 17 | 18 | 19 | 20 | 21 | 22 | 23 | 24 | 6 | 7 | 8 | 9 | 10 |
| **Tire** | | | | | | | | | | | | | | | | | |
| Groove depth H (mm) | 9.0 | 9.0 | 8.5 | 8.5 | 8.5 | 8.5 | 8.5 | 8.5 | 8.5 | 8.5 | 8.5 | 8.5 | | | | | |
| G (kg) | 8.4 | 8.4 | 7.9 | 7.9 | 7.9 | 7.9 | 7.9 | 7.9 | 7.9 | 7.9 | 7.9 | 7.9 | | | | | |
| $W_L$ (kg) | 534 | 534 | 534 | 534 | 534 | 534 | 534 | 534 | 534 | 534 | 534 | 534 | | | | | |
| $G/W_L$ | 0.0157 | 0.0157 | 0.0148 | 0.0148 | 0.0148 | 0.0148 | 0.0148 | 0.0148 | 0.0148 | 0.0148 | 0.0148 | 0.0148 | | | | | |
| $L_0/L_{90}$ | 0.90 | 0.90 | 0.90 | 0.90 | 0.90 | 0.90 | 0.90 | 0.90 | 0.90 | 0.90 | 1.00 | 0.90 | | | | | |
| $\theta/G$ | 12.1 | 12.7 | 12.6 | 13.5 | 14.8 | 13.8 | 13.0 | 13.0 | 13.3 | 15.1 | 15.1 | 14.4 | | | | | |
| **Index** | | | | | | | | | | | | | | | | | |
| Wet grip performance | 110 | 113 | 115 | 117 | 120 | 119 | 115 | 115 | 116 | 119 | 115 | 121 | | | | | |
| On-ice performance | 105 | 106 | 107 | 108 | 110 | 110 | 109 | 109 | 109 | 110 | 109 | 113 | | | | | |
| **Compounding amount (part by mass)** | | | | | | | | | | | | | | | | | |
| NR | 45 | 45 | 45 | 45 | 45 | | | | | | | | 45 | 45 | 45 | 45 | 45 |
| BR | 55 | 55 | 55 | 55 | 55 | | | | | | | | 55 | 55 | 55 | 55 | 55 |
| Carbon black | 30 | 30 | 30 | 15 | 15 | | | | | | | | 30 | 30 | 30 | 15 | 15 |
| Silica | 40 | 40 | 40 | 55 | 55 | | | | | | | | 40 | 40 | 40 | 55 | 55 |
| Silane coupling agent | 3.2 | 3.2 | 3.2 | 3.2 | 3.2 | | | | | | | | 3.2 | 3.2 | 3.2 | 3.2 | 3.2 |
| Powdered rubber | 10 | 10 | 10 | 10 | 10 | | | | | | | | 10 | 10 | 10 | 10 | 10 |
| Recycled rubber | - | - | - | - | - | | | | | | | | - | - | - | - | - |
| Silicone 1 | - | - | 5.0 | - | - | | | | | | | | - | - | 5.0 | - | - |
| Silicone 2 | - | - | - | - | - | | | | | | | | - | - | - | - | - |
| Resin component 1 | - | - | - | - | - | | | | | | | | - | - | - | - | - |
| Resin component 2 | - | - | - | - | - | | | | | | | | - | - | - | - | - |
| Oil 1 | 30 | 30 | 30 | 30 | 30 | | | | | | | | 30 | 30 | 30 | 30 | 30 |
| Oil 2 | 10 | 10 | 10 | 10 | 10 | | | | | | | | 10 | 10 | 10 | 10 | 10 |
| Wax | 1.5 | 1.5 | 1.5 | 1.5 | 1.5 | | | | | | | | 1.5 | 1.5 | 1.5 | 1.5 | 1.5 |
| Antioxidant 1 | 2.0 | 2.0 | 2.0 | 2.0 | 2.0 | | | | | | | | 2.0 | 2.0 | 2.0 | 2.0 | 2.0 |

(continued)

|  | Comparative example | | | | |
|---|---|---|---|---|---|
|  | 6 | 7 | 8 | 9 | 10 |
| **Compounding amount (part by mass)** | | | | | |
| Antioxidant 2 | 1.0 | 1.0 | 1.0 | 1.0 | 1.0 |
| Zinc oxide | 2.0 | 2.0 | 2.0 | 2.0 | 2.0 |
| Stearic acid | 2.0 | 2.0 | 2.0 | 2.0 | 2.0 |
| Sulfur | 1.0 | 1.0 | 1.0 | 1.0 | 1.0 |
| Vulcanization accelerator 1 | 1.5 | 1.5 | 1.5 | 1.5 | 1.5 |
| Vulcanization accelerator 2 | 2.5 | 2.5 | 2.5 | 2.5 | 2.5 |
| **Rubber layer** | | | | | |
| Contact angle $\theta$ (°) | 105 | 105 | 107 | 103 | 103 |
| 0°C tan $\delta$ | 0.24 | 0.24 | 0.25 | 0.24 | 0.24 |
| 0°C E* (MPa) | 10.0 | 9.9 | 9.5 | 9.9 | 10.0 |
| 0°C tan $\delta$/0°C E* | 0.024 | 0.024 | 0.026 | 0.024 | 0.024 |

|  | Comparative example | | | | |
|---|---|---|---|---|---|
|  | 6 | 7 | 8 | 9 | 10 |
| **Tire** | | | | | |
| Groove depth H (mm) | 10.0 | 9.0 | 10.0 | 10.0 | 8.5 |
| G (kg) | 8.6 | 8.4 | 8.6 | 7.8 | 7.8 |
| $W_L$ (kg) | 534 | 534 | 534 | 534 | 534 |
| $G/W_L$ | 0.0161 | 0.0157 | 0.0161 | 0.0161 | 0.0146 |
| $L_0/L_{90}$ | 0.90 | 0.90 | 0.90 | 0.90 | 0.90 |
| $\theta/G$ | 10.5 | 10.6 | 11.3 | 10.4 | 10.3 |
| **Index** | | | | | |
| Wet grip performance | 94 | 95 | 97 | 99 | 100 |
| On-ice performance | 95 | 96 | 98 | 99 | 100 |

From the results in Tables 1 and 2, it can be found that, in the tire of the present disclosure, in which the tire weight with respect to the maximum load capacity of the tire and the contact angle with the pure water of the rubber composition of the tread are set within predetermined ranges, wet grip performance during high-speed running is improved. In addition, it can be found that, in the preferred embodiment, on-ice performance is also improved.

<Embodiments>

Examples of embodiments of the present invention are shown below.

[1] A tire comprising a tread part, the tread part having at least one rubber layer, wherein a ratio ($G/W_L$) of a tire weight G (kg) to the maximum load capacity $W_L$ (kg) of the tire is 0.0160 or less, wherein the tread part has land parts partitioned by tread edge and a plurality of circumferential grooves extending continuously in a tire circumferential direction, wherein a first rubber layer of the tread surface is composed of a rubber composition comprising a rubber component, and wherein a contact angle $\theta$ with a pure water of the rubber composition is 105° or more.

[2] The tire of [1] above, wherein the rubber composition comprises 50 parts by mass or more (preferably 55 parts by mass or more) of silica based on 100 parts by mass of the rubber component.

[3] The tire of [1] or [2] above, wherein a content of carbon black in the rubber composition based on 100 parts by mass of the rubber component is 15 parts by mass or less.

[4] The tire of any one of [1] to [3] above, wherein the ratio ($G/W_L$) of the tire weight G (kg) to the maximum load capacity $W_L$ (kg) of the tire is 0.0150 or less.

[5] The tire of any one of [1] to [4] above, wherein a ratio ($\theta/G$) of the contact angle $\theta$ (°) with the pure water of the rubber composition to the tire weight G (kg) is 12.5 or more (preferably 12.7 or more, more preferably 13.0 or more, further preferably 13.3 or more, particularly preferably 13.5 or more).

[6] The tire of any one of [1] to [5] above, wherein the contact angle $\theta$ with the pure water of the rubber composition is 115° or more.

[7] The tire of any one of [1] to [6] above, wherein the rubber composition comprises at least one selected from a group consisting of a recycled rubber and a powdered rubber.

[8] The tire of any one of [1] to [7] above, wherein the rubber composition comprises at least one selected from a group consisting of silicone, a silicone-based polyurethane, and a fluorine-based polyurethane.

[9] The tire of any one of [1] to [8] above, wherein the rubber composition comprises at least one selected from a group consisting of a terpene-based resin and a cyclopentadiene-based resin.

[10] The tire of any one of [1] to [9] above, wherein the rubber composition comprises 30 parts by mass or more of oil based on 100 parts by mass of the rubber component.

[11] The tire of any one of [1] to [10] above, wherein a ratio (0°C tan $\delta$/0°C E*) of a tan $\delta$ at 0°C (0°C tan $\delta$) of the rubber composition to a complex elastic modulus (MPa) at 0°C (0°C E*) of the rubber composition is 0.020 or more (preferably 0.025 or more, more preferably 0.030 or more).

[12] The tire of any one of [1] to [11] above, wherein a groove depth of the deepest part of the circumferential groove is 5.0 to 9.0 mm (preferably 6.0 to 8.5 mm).

[13] The tire of any one of [1] to [12] above, wherein, when a length in a width direction on the tread surface of the land part closest to a tire equatorial plane is defined as $L_0$, and a length in a width direction at 90% position of the groove depth of the deepest part of the circumferential groove adjacent to the land part closest to the tire equatorial plane is defined as $L_{90}$, $L_0/L_{90}$ is 0.95 or less.

REFERENCE SIGNS LIST

1. Tread surface
2. Circumferential groove
3. Land part
4. Groove edge
5. Groove wall
C. Tire equatorial plane
H. Groove bottom of circumferential groove
$L_0$. Length in width direction of land part
$L_{90}$. Length in width direction at the time of 90% abrasion of tread part

**Claims**

1. A tire comprising a tread part, the tread part having at least one rubber layer,

   wherein a ratio ($G/W_L$) of a tire weight G (kg) to the maximum load capacity $W_L$ (kg) of the tire is 0.0160 or less,
   wherein the tread part has land parts partitioned by tread edge and a plurality of circumferential grooves extending continuously in a tire circumferential direction,
   wherein a first rubber layer of the tread surface is composed of a rubber composition comprising a rubber component, and
   wherein a contact angle $\theta$ with a pure water of the rubber composition is 105° or more.

2. The tire of claim 1, wherein the rubber composition comprises 50 parts by mass or more of silica based on 100 parts by mass of the rubber component.

3. The tire of claim 1 or 2, wherein a content of carbon black in the rubber composition based on 100 parts by mass of the rubber component is 15 parts by mass or less.

4. The tire of any one of claims 1 to 3, wherein the ratio ($G/W_L$) of the tire weight G (kg) to the maximum load capacity $W_L$ (kg) of the tire is 0.0150 or less.

5. The tire of any one of claims 1 to 4, wherein a ratio ($\theta/G$) of the contact angle $\theta$ (°) with the pure water of the rubber composition to the tire weight G (kg) is 12.5 or more.

6. The tire of any one of claims 1 to 5, wherein the contact angle $\theta$ with the pure water of the rubber composition is 115° or more.

7. The tire of any one of claims 1 to 6, wherein the rubber composition comprises at least one selected from a group consisting of a recycled rubber and a powdered rubber.

8. The tire of any one of claims 1 to 7, wherein the rubber composition comprises at least one selected from a group consisting of silicone, a silicone-based polyurethane, and a fluorine-based polyurethane.

9. The tire of any one of claims 1 to 8, wherein the rubber composition comprises at least one selected from a group consisting of a terpene-based resin and a cyclopentadiene-based resin.

10. The tire of any one of claims 1 to 9, wherein the rubber composition comprises 30 parts by mass or more of oil based on 100 parts by mass of the rubber component.

11. The tire of any one of claims 1 to 10, wherein a ratio (0°C tan $\delta$/0°C E*) of a tan $\delta$ at 0°C (0°C tan $\delta$) of the rubber composition to a complex elastic modulus (MPa) at 0°C (0°C E*) of the rubber composition is 0.020 or more.

12. The tire of any one of claims 1 to 11, wherein a groove depth of the deepest part of the circumferential groove is 5.0 to 9.0 mm.

13. The tire of any one of claims 1 to 12, wherein, when a length in a width direction on the tread surface of the land part closest to a tire equatorial plane is defined as $L_0$, and a length in a width direction at 90% position of the groove depth of the deepest part of the circumferential groove adjacent to the land part closest to the tire equatorial plane is defined as $L_{90}$, $L_0/L_{90}$ is 0.95 or less.

FIG. 1

# FIG.2

<div align="center">**INTERNATIONAL SEARCH REPORT**</div>

| International application No. |
| --- |
| **PCT/JP2022/004101** |

**A. CLASSIFICATION OF SUBJECT MATTER**

*B60C 11/00*(2006.01)i; *B60C 1/00*(2006.01)i; *C08K 3/04*(2006.01)i; *C08K 3/36*(2006.01)i; *C08L 7/00*(2006.01)i; *C08L 9/00*(2006.01)i; *C08L 17/00*(2006.01)i; *C08L 57/02*(2006.01)i; *C08L 75/04*(2006.01)i; *C08L 83/04*(2006.01)i
FI: B60C11/00 D; B60C1/00 A; C08L7/00; C08L9/00; C08K3/36; C08K3/04; C08L17/00; C08L75/04; C08L83/04; C08L57/02

According to International Patent Classification (IPC) or to both national classification and IPC

**B. FIELDS SEARCHED**

Minimum documentation searched (classification system followed by classification symbols)

B60C1/00-19/12; C08K3/04; C08K3/36; C08L7/00; C08L9/00; C08L17/00; C08L57/02; C08L75/04; C08L83/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | WO 2020/059673 A1 (SUMITOMO RUBBER INDUSTRIES, LTD.) 26 March 2020 (2020-03-26)<br>claims, paragraphs [0001]-[0018], [0076]-[0134] | 1-13 |
| Y | JP 2017-95673 A (SUMITOMO RUBBER INDUSTRIES, LTD.) 01 June 2017 (2017-06-01)<br>claims, paragraphs [0007]-[0013], [0047], [0052]-[0062] | 1-13 |
| Y | JP 2005-281390 A (OGAWA, Kazufumi) 13 October 2005 (2005-10-13)<br>claims, paragraphs [0001]-[0081] | 1-13 |
| Y | WO 2018/116835 A1 (SUMITOMO RUBBER INDUSTRIES, LTD.) 28 June 2018 (2018-06-28)<br>paragraph [0064] | 7-8, 11-13 |
| Y | CN 109749123 A (SOUTH CHINA UNIVERSITY OF TECHNOLOGY) 14 May 2019 (2019-05-14)<br>paragraphs [0001]-[0046], fig. 1 | 7-8, 11-13 |

☑ Further documents are listed in the continuation of Box C.  ☑ See patent family annex.

| | |
| --- | --- |
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **25 February 2022** | **08 March 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2022/004101**

**C.    DOCUMENTS CONSIDERED TO BE RELEVANT**

| Category* | Citation of document, with indication, where appropriate, of the relevant passages | Relevant to claim No. |
|---|---|---|
| Y | JP 10-168234 A (SUMITOMO RUBBER INDUSTRIES, LTD.) 23 June 1998 (1998-06-23) claims, paragraphs [0001]-[0032] | 8, 11-13 |
| Y | JP 2020-12083 A (THE YOKOHAMA RUBBER CO., LTD.) 23 January 2020 (2020-01-23) claims, paragraphs [0001]-[0073] | 8, 11-13 |
| Y | JP 2019-116574 A (SUMITOMO RUBBER INDUSTRIES, LTD.) 18 July 2019 (2019-07-18) claims, paragraphs [0091], [0093], [0097], table 1, examples 3, 5 | 11-13 |
| Y | JP 2001-287509 A (BRIDGESTONE CORP.) 16 October 2001 (2001-10-16) paragraphs [0136], [0148] | 12-13 |
| Y | JP 6699079 B1 (SUMITOMO RUBBER INDUSTRIES, LTD.) 27 May 2020 (2020-05-27) claims, paragraphs [0001], [0148]-[0156], table 2, fig. 2 | 13 |
| A | JP 5-286055 A (THE YOKOHAMA RUBBER CO., LTD.) 02 November 1993 (1993-11-02) entire text | 1-13 |
| A | JP 9-164809 A (THE YOKOHAMA RUBBER CO., LTD.) 24 June 1997 (1997-06-24) entire text | 1-13 |
| A | JP 9-99712 A (BRIDGESTONE CORP.) 15 April 1997 (1997-04-15) entire text | 1-13 |
| A | EP 3760425 A1 (BRIDGESTONE EUROPE NV/SA) 06 January 2021 (2021-01-06) entire text | 1-13 |
| A | US 2009/0084477 A1 (THE GOODYEAR TIRE & RUBBER COMPANY) 02 April 2009 (2009-04-02) entire text | 1-13 |

Form PCT/ISA/210 (second sheet) (January 2015)

## INTERNATIONAL SEARCH REPORT
### Information on patent family members

International application No.

**PCT/JP2022/004101**

| Patent document cited in search report | | | Publication date (day/month/year) | Patent family member(s) | | | Publication date (day/month/year) |
|---|---|---|---|---|---|---|---|
| WO | 2020/059673 | A1 | 26 March 2020 | CN | 112703115 | A | |
| JP | 2017-95673 | A | 01 June 2017 | (Family: none) | | | |
| JP | 2005-281390 | A | 13 October 2005 | (Family: none) | | | |
| WO | 2018/116835 | A1 | 28 June 2018 | US<br>paragraph [0114]<br>US<br>EP<br>KR<br>CN | 2019/0030954<br><br>2019/0248182<br>3418074<br>10-2018-0084763<br>108463356 | A1<br><br>A1<br>A1<br>A<br>A | |
| CN | 109749123 | A | 14 May 2019 | (Family: none) | | | |
| JP | 10-168234 | A | 23 June 1998 | (Family: none) | | | |
| JP | 2020-12083 | A | 23 January 2020 | (Family: none) | | | |
| JP | 2019-116574 | A | 18 July 2019 | US<br>claims, paragraphs [0138]-[0142], [0144], table 1 | 2019/0193464 | A1 | |
| JP | 2001-287509 | A | 16 October 2001 | (Family: none) | | | |
| JP | 6699079 | B1 | 27 May 2020 | WO | 2021/060382 | A1 | |
| JP | 5-286055 | A | 02 November 1993 | (Family: none) | | | |
| JP | 9-164809 | A | 24 June 1997 | (Family: none) | | | |
| JP | 9-99712 | A | 15 April 1997 | (Family: none) | | | |
| EP | 3760425 | A1 | 06 January 2021 | (Family: none) | | | |
| US | 2009/0084477 | A1 | 02 April 2009 | EP<br>BR | 2042346<br>PI0803616 | A1<br>A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007056137 A

**Non-patent literature cited in the description**

- Table of Solubility Parameters. **K. L. HOY.** Solvent and Coatings Materials Research and Development Department. Union Carbites Corp, 1985